# EUROPEAN PATENT APPLICATION

(11) **EP 4 603 635 A1**
(43) Date of publication of application: **20.08.2025**
(21) Application number: 24845613.9
(22) Date of filing: 23.07.2024
(51) Int. Cl.: D06M 15/263, C08F 20/68, C08F 20/70, C08G 18/32, C08L 33/04, C08L 75/04, C09K 3/18, D06M 15/564

(54) **FIBER STRUCTURE**

(30) Priority: 27.07.2023 CN 202310930099
(71) Applicant: DAIKIN INDUSTRIES, LTD., Osaka-shi, Osaka 530-0001 (JP); Daikin Fluorochemicals (China) Co., Ltd., Jiangsu 215522 (CN)
(72) Inventor: YE, Minhua, Changshu, Jiangsu 215522 (CN); ZHOU, Bin, Changshu, Jiangsu 215522 (CN); ZHENG, Zhihua, Changshu, Jiangsu 215522 (CN); WANG, Shuzhou, Changshu, Jiangsu 215522 (CN); JIN, Chao, Changshu, Jiangsu 215522 (CN); NAKAMURA, Keisuke, Changshu, Jiangsu 215522 (CN); YOSHIOKA, Takuya, Changshu, Jiangsu 215522 (CN); FUKUDA, Teruyuki, Osaka-Shi, Osaka 530-0001 (JP)
(74) Representative: Hoffmann Eitle
(86) International application number: PCT/JP2024/026305
(87) International publication number: WO 2025/023238

(57) **Abstract**

A novel fiber structure exhibiting water repellency is provided by providing a fiber structure in which a water-repellent compound having a hydrocarbon group having 6-40 carbon atoms is attached to a fiber base material, the fiber structure having an air permeability of more than 20 cc/cm²/sec. and a fabric density of more than 100 g/m². A novel water repellent agent which can be used in the production of the fiber structure is also provided.

## Description

### Technical Field

The present disclosure relates to a fiber structure, in particular to a fiber structure which has undergone water repellent treatment.

### Background Art

Patent Document 1 discloses a water-repellent composition comprising a polyurethane resin compound, a non-fluorine water-repellent compound, a surfactant and a liquid medium. However, air permeability and fabric density of the substrates used are not specifically disclosed. Furthermore, soaking resistance (in particular, achieving both water repellency and soaking resistance) of the treated substrates has not been considered.

### Citation List

### Patent Literature

Patent Literature 1: WO2021/132172

### Summary of Invention

### Technical Problem

An object of the present disclosure is to provide a novel fiber structure with water repellency and a novel water-repellent agent which may be used for the manufacture of the fiber structure.

### Solution to Problem

The present disclosure includes the following embodiments.

### [Item 1]

A fiber structure comprising a fiber substrate to which a water-repellent compound having a hydrocarbon group having 6 or more and 40 or less carbon atoms is adhered, wherein
the fiber structure has an air permeability of more than 20 cc/cm²/sec and a fabric density of more than 100 g/m².

### [Item 2]

The fiber structure according to item 1, wherein the water-repellent compound is at least one selected from the group consisting of an acrylic polymer and an isocyanate derivative.

### [Item 3]

The fiber structure according to item 2, wherein
the water-repellent compound comprises the acrylic polymer, and
the acrylic polymer comprises a repeating unit derived from a multi-carbonyl monomer having one ethylenically unsaturated double bond and two or more carbonyl groups.

### [Item 4]

The fiber structure according to item 2 or 3, wherein
the water-repellent compound comprises the isocyanate derivative, and
the isocyanate derivative comprises a moiety derived from a cationic active hydrogen compound.

### [Item 5]

The fiber structure according to any one of items 2 to 4, wherein the water-repellent compound comprises the acrylic polymer and the isocyanate derivative.

### [Item 6]

The fiber structure according to any one of items 2 to 5, wherein the water-repellent compound comprises the acrylic polymer and the isocyanate derivative that has a water contact angle of 100° or more and that comprises a moiety derived from a cationic active hydrogen compound.

### [Item 7]

The fiber structure according to any one of items 2 to 6, wherein the weight ratio between the acrylic polymer and the isocyanate derivative is 50/50 to 80/20.

### [Item 8]

The fiber structure according to any one of items 1 to 7, wherein the fiber structure has a water repellency of grade 4 or higher as measured by the spray test method specified in JIS L1092:2009, and a soaking velocity of less than 10 mm/2h as measured by the test method specified in DIN 53924.

### [Item 9]

The fiber structure according to any one of items 1 to 8, wherein
the water-repellent compound comprises an acrylic polymer and an isocyanate derivative,
the acrylic polymer comprises a monomer (a) having a hydrocarbon group having 6 or more and 40 or less carbon atoms,
the monomer (a) is a monomer represented by the formula:

   CH₂=C(-X^{a})-C(=O)-Y^{a}(R²³)ₖ

   wherein R^{a} is each independently a hydrocarbon group having 6 to 40 carbon atoms,
   X^{a} is a hydrogen atom, a monovalent organic group or a halogen atom,
   Y^{a} is a divalent to tetravalent group, and
   k is 1 to 3,
   the amount of the repeating unit derived from the monomer (a) is 50% by weight or more relative to the acrylic polymer,
   the isocyanate derivative has a water contact angle of 100° or more and comprises a moiety derived from a cationic active hydrogen compound, and
   the weight ratio between the acrylic polymer and the isocyanate derivative is 50/50 to 80/20.

### [Item 10]

A water-repellent agent comprising a water-repellent compound having a hydrocarbon group having 6 or more and 40 or less carbon atoms, wherein
the water-repellent compound comprises an acrylic polymer and an isocyanate derivative,
the isocyanate derivative has a water contact angle of 100° or more and comprises a moiety derived from a cationic active hydrogen compound, and
the weight ratio between the acrylic polymer and the isocyanate derivative is 50/50 to 80/20.

### [Item 11]

The water-repellent agent according to item 10, wherein the acrylic polymer comprises a repeating unit derived from a multi-carbonyl monomer having one ethylenically unsaturated double bond and two or more carbonyl groups.

### [Item 12]

A method for producing a fiber structure, comprising treating a fiber substrate having an air permeability of more than 20 cc/cm²/sec and a fabric density of more than 100 g/m² with a water-repellent agent comprising a water-repellent compound having a hydrocarbon group having 6 or more and 40 or less carbon atoms.

### [Item 13]

A method for producing a fiber structure, comprising treating a fiber substrate having an air permeability of more than 20 cc/cm²/sec with a water-repellent agent, wherein
the water-repellent agent comprises a water-repellent compound having a hydrocarbon group having 6 or more and 40 or less carbon atoms,
the water-repellent compound comprises an acrylic polymer and an isocyanate derivative, and
the isocyanate derivative has a water contact angle of 100° or more and comprises a moiety derived from a cationic active hydrogen compound.

### [Item 14]

The method for producing a fiber structure according to item 13, wherein the weight ratio between the acrylic polymer and the isocyanate derivative is 50/50 to 80/20.

### [Item 15]

The method for producing a fiber structure according to item 13 or 14, wherein
the water-repellent compound comprises the acrylic polymer, and
the acrylic polymer comprises a repeating unit derived from a multi-carbonyl monomer having one ethylenically unsaturated double bond and two or more carbonyl groups.

### Advantageous Effect of Invention

The present disclosure can provide a novel fiber structure with water repellency and a novel water-repellent agent which may be used for the manufacture of the fiber structure.

### Description of Embodiments

### <Definition of Terms>

As used herein, the "n valent group" refers to a group having n bonds, i.e., a group forming n bonds. The "n valent organic group" refers to a n valent group containing carbon. Such organic groups are not limited, but can be hydrocarbon groups or derivatives thereof. The derivative of the hydrocarbon group refers to a group that has one or more of N, O, S, Si, amide, sulfonyl, siloxane, carbonyl, carbonyloxy, halogen and the like at the end or in the molecular chain of a hydrocarbon group.

As used herein, the "hydrocarbon group" refers to a group containing carbon and hydrogen and a group in which a hydrogen atom is removed from the hydrocarbon. Such hydrocarbon groups are not limited, but include C₁₋₂₀ hydrocarbon groups, such as an aliphatic hydrocarbon group and an aromatic hydrocarbon group. The above "aliphatic hydrocarbon group" may be either linear, branched, or cyclic, and may be either saturated or unsaturated. The hydrocarbon group may include one or more ring structures. In an explicit term, the hydrocarbon group may be substituted by one or more substituents.

Whether or not the phrases "independently at each occurrence", "independently with each other", "each independently" or similar expressions are explicitly described herein, unless otherwise described that they are exceptions, when a plurality of terms (symbols) that can occur in a chemical structure is defined, such definition is applied independently to each occurrence.

The chemical structures described herein should be understood not to encompass chemical structures that are recognized by those skilled in the art as being chemically impossible or extremely unstable.

### <Water-repellent compound>

The water-repellent compound according to the present disclosure adheres to a substrate and imparts water-repellency to the substrate, and may be a water-repellent compound having 6 or more and 40 or less carbon atoms.

### [Characteristics]

The water-repellent compound may have a water contact angle of 50° or more, 55° or more, 65° or more, 75° or more, 85° or more, 90° or more, 100° or more, 105° or more, 110° or more, or 115° or more, and preferably 100° or more, and 160° or less, 140° or less, 130° or less, 120° or less, 110° or less, 100° or less, or 90° or less. A water contact angle of the water-repellent compound of the lower limit or more can impart good water-repellency to a substrate. The water contact angle is a static contact angle of the water-repellent compound to a spin-coated film, which is obtained by dropping 2 µL of water on a spin-coated film and measuring the contact angle one second after the droplet reaches the film.

The water-repellent compound according to the present disclosure may not have any one selected from the group consisting of a fluoroalkyl group having 8 or more carbon atoms, a perfluoroalkyl group having 8 or more carbon atoms, a fluoroalkyl group having 4 or more carbon atoms, a perfluoroalkyl group having 4 or more carbon atoms, a perfluoroalkyl group, a fluoroalkyl group and a fluorine atom. The water-repellent compound can impart liquid-repellency to substrates without including these fluorine-containing groups.

### (Hydrocarbon group having 6 or more and 40 or less carbon atoms)

The water-repellent compound may have a hydrocarbon group having 6 or more and 40 or less carbon atoms. The hydrocarbon group having 6 or more and 40 or less carbon atoms works to impart water-repellency to substrates.

The hydrocarbon group may be a monovalent hydrocarbon group. The hydrocarbon group may be an aromatic hydrocarbon group or an aliphatic hydrocarbon group, and preferably an aliphatic hydrocarbon group, and in particular a saturated aliphatic hydrocarbon group (an alkyl group). The hydrocarbon group may be branched, cyclic or linear, and preferably chain, in particular, linear.

The hydrocarbon group may have 6 or more, 8 or more, 10 or more, 12 or more, 14 or more, 16 or more, 18 or more, 20 or more, or 22 or more, and preferably 10 or more, 12 or more, or 16 or more carbon atoms, and may have 40 or less, 35 or less, 30 or less, 25 or less, 20 or less, 15 or less, or 10 or less, and preferably 30 or less, 25 or less, or 20 or less carbon atoms.

Examples of the water-repellent compound may include, but not limited to, at least one selected from the group consisting of an acrylic polymer and an isocyanate derivative, and is preferably a combination of an acrylic polymer and an isocyanate derivative. The amount of the acrylic polymer may be 10% by weight or more, 30% by weight or more, 50% by weight or more, 70% by weight or more, or 90% by weight or more, and 95% by weight or less, 75% by weight or less, 55% by weight or less, 35% by weight or less, or 15% by weight or less relative to the sum of the acrylic polymer and the isocyanate derivative. It is preferable that the weight ratio between the acrylic polymer and the isocyanate derivative is 50/50 to 80/20.

### <Acrylic polymer>

In the present disclosure, an acrylic polymer may be used as the water-repellent compound. The acrylic polymer has a hydrocarbon group having 6 or more and 40 or less carbon atoms.

The acrylic polymer may have a weight average molecular weight of 3,000 or more, 5,000 or more, 10,000 or more, 30,000 or more, 100,000 or more, 300,000 or more, or 500,000 or more, and 5,000,000 or less, 3,000,000 or less, 1,000,000 or less, 750,000 or less, 500,000 or less, 300,000 or less, 100,000 or less, 75,000 or less, 50,000 or less, 30,000 or less, 10,000 or less, or 5,000 or less.

The acrylic polymer has a water contact angle of 50° or more, 55° or more, 65° or more, 75° or more, 85° or more, 90° or more, 100° or more, or 105° or more, 110° or more, or 115° or more, and 160° or less, 140° or less, 130° or less, 120° or less, 110° or less, 100° or less, or 90° or less. A water contact angle of the acrylic polymer of the lower limit or more can impart good water-repellency to a substrate. The water contact angle is a static contact angle of the acrylic polymer to a spin-coated film, which is obtained by dropping 2 µL of water on a spin-coated film and measuring the contact angle one second after the droplet reaches the film.

### {(a) Hydrocarbon Group-containing Monomer}

The acrylic polymer has a repeating unit derived from a monomer (a) having a hydrocarbon group having 6 or more and 40 or less carbon atoms.

The hydrocarbon group which the monomer (a) has may be an aromatic hydrocarbon group or an aliphatic hydrocarbon group, and is preferably an aliphatic hydrocarbon group, and in particular a saturated aliphatic hydrocarbon group (an alkyl group). The hydrocarbon group is branched or linear, and preferably linear. The hydrocarbon group may be saturated or unsaturated. The hydrocarbon group is preferably a saturated aliphatic hydrocarbon group (alkyl group). The hydrocarbon group may have 6 or more, 8 or more, 10 or more, 12 or more, 14 or more, 16 or more, 18 or more, 20 or more, or 22 or more carbon atoms, preferably 10 or more, 12 or more, 14 or more, or 16 or more carbon atoms, and may have 40 or less, 35 or less, 30 or less, 25 or less, 20 or less, 15 or less, or 10 or less carbon atoms, and preferably 30 or less, 25 or less, or 20 or less carbon atoms.

The monomer (a) may have an amide group, a urea group or a urethane group. The hydrocarbon monomer may be a combination of a hydrocarbon monomer having an amide group, a urea group or an urethane group and a hydrocarbon monomer which does not have an amide group, a urea group or an urethane group. By including these groups in the monomer (a), the effect of the present disclosure can be attained well.

The monomer (a) having a hydrocarbon group having 6 or more and 40 or less carbon atoms is preferably a monomer represented by the formula:

CH₂=C(-X^{a})-C(=O)-Y^{a}(R^{a})ₖ

wherein R^{a} is each independently a hydrocarbon group having 6 to 40 carbon atoms,
X^{a} is a hydrogen atom, a monovalent organic group or a halogen atom,
Y^{a} is a divalent to tetravalent group, and
k is 1 to 3.

X^{a} may be a hydrogen atom, a methyl group, a halogen excluding a fluorine atom, a substituted or non-substituted benzyl group, or a substituted or non-substituted phenyl group. Examples of X^{a} include a hydrogen atom, a methyl group, a chlorine atom, a bromine atom, an iodine atom and a cyano group. X^{a} is preferably a hydrogen atom, a methyl group or a chlorine atom. X^{a} is particularly preferably a hydrogen atom.

Y^{a} is a divalent to tetravalent group. Y^{a} is preferably a divalent group.

Y^{a} is preferably a hydrocarbon group having 1 carbon atom, -C₆H₄-, or a group composed of at least one selected from -O-, -C(=O)-, -S(=O)₂- and -NH- excluding a hydrocarbon group. Examples of hydrocarbon groups having 1 carbon atom include -CH₂-, -CH(-)₂ and -C(-)₃.

Y^{a} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'-, or -Y'-R'-Y'-R'-[wherein Y' is a direct bond, -O-, -NH- or -S(=O)₂-, and R' is -(CH₂)ₘ- (wherein m is an integer of 1 to 5), or - C₆H₄- (a phenylene group)].

Specific examples of Y^{a} include -O-, -NH-, -O-C(=O)-, -C(=O)-NH-, -NH-C(=O)-, -O-C(=O)-NH-, -NH-C(=O)-O-, -NH-C(=O)-NH-, -O-C₆H₄-, -O- (CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C(=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O-(CH₂)ₘ-O-C₆H₄-, -O-(CH₂)ₘ-NH-S(=O)₂-, -O-(CH₂)ₘ-S(=O)₂-NH-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-, -NH-(CH₂)ₘ-NH-S(=O)₂- or -NH-(CH₂)ₘ-S(=O)₂-NH- [wherein m is 1 to 5, in particular 2 or 4].

Ya is preferably -O-, -NH-, -O-(CH₂)ₘ-O-C(=O)-, -O-(CH₂)ₘ-NH-C(=O)-, -O-(CH₂)ₘ-O-C(=O)-NH-, -O-(CH₂)ₘ-NH-C(=O)-O-, -O-(CH₂)ₘ-NH-C(=O)-NH-, -O-(CH₂)ₘ-NH-S(=O)₂-, - O-(CH₂)ₘ-S(=O)₂-NH-, -NH-(CH₂)ₘ-NH-S(=O)₂- or -NH-(CH₂)ₘ- S(=O)₂-NH-
[wherein m is an integer of 1 to 5, in particular 2 or 4]. Y^{a} is more preferably -O- or O-(CH₂)ₘ-NH-C(=O)-, in particular -O-(CH₂)ₘ-NH-C(=O)-.

R^{a} is preferably a linear or branched hydrocarbon group. The hydrocarbon group may be a linear hydrocarbon group. The hydrocarbon group is preferably an aliphatic hydrocarbon group, particularly preferably a saturated aliphatic hydrocarbon group and especially preferably an alkyl group. The hydrocarbon group has preferably 12 to 30, for example, 16 to 26 or 15 to 26, in particular 18 to 22 or 17 to 22 carbon atoms.

Examples of monomers (a) include:
(a1) a monomer represented by the formula:

   CH₂=C(-X^{a1}) -C (=O) -Y^{a1}-R^{a1}

   [wherein R^{a1} is a hydrocarbon group having 6 to 40 carbon atoms,
   X^{a1} is a hydrogen atom, a monovalent organic group or a halogen atom, and
   Y^{a1} is -O- or -NH-]; and
(a2) a monomer represented by the formula:

   CH₂=C(-X^{a2}) -C (=O) -Y^{a21}-Z(-Y^{a22}-R^{a2})ₙ

   [wherein R^{a2} is each independently a hydrocarbon group having 6 to 40 carbon atoms,
   X^{a2} is a hydrogen atom, a monovalent organic group or a halogen atom,
   Y^{a21} is -O- or -NH-,
   Y^{a22} is each independently a direct bond or a group composed of at least one selected from -O-, -C(=O)-, - S(=O)₂-, -NH- and -CH₂-,
   Z is a direct bond or a divalent or trivalent hydrocarbon group having 1 to 5 carbon atoms, and
   n is 1 or 2].

### ((a1) Monomer)

The monomer (a1) is a compound represented by the formula:

CH₂=C(-X^{a1})-C(=O)-Y^{a1}-R^{a1}

[wherein R^{a1} is a hydrocarbon group having 6 to 40 carbon atoms,
X^{a1} is a hydrogen atom, a monovalent organic group or a halogen atom, and
Y^{a1} is -O- or -NH-].

The monomer (a1) is a long chain acrylate ester monomer wherein Y^{a1} is -O-, or a long chain acrylamide monomer wherein Y^{a1} is -NH-.

R^{a1} is preferably an aliphatic hydrocarbon group, particularly preferably a saturated aliphatic hydrocarbon group and especially preferably an alkyl group. In R^{a1}, the hydrocarbon group has preferably 12 to 30, for example, 16 to 26, in particular 18 to 22 carbon atoms.

X^{a1} may be a hydrogen atom, a methyl group, a halogen excluding a fluorine atom, a substituted or non-substituted benzyl group, or a substituted or non-substituted phenyl group. X^{a1} is preferably a hydrogen atom, a methyl group or a chlorine atom.

Preferred examples of long chain acrylate ester monomers include lauryl (meth)acrylate, stearyl (meth)acrylate, icosyl (meth)acrylate, behenyl (meth)acrylate, stearyl α-chloroacrylate, icosyl α-chloroacrylate and behenyl α-chloroacrylate.

Examples of long chain acrylamide monomers include stearyl (meth)acrylamide, icosyl (meth)acrylamide and behenyl (meth)acrylamide.

### ((a2) Monomer)

The monomer (a2) is different from the monomer (a1). The monomer (a2) is (meth)acrylate or (meth)acrylamide having a group composed of at least one selected from - O-, -C(=O)-, -S(=O)₂-, -NH- and -CH₂-.

The monomer (a2) may be a compound represented by the formula:

CH₂=C(-X^{a2})-C(=O)-Y^{a21}-Z(-Y^{a22}-R^{a2})ₙ

[wherein R^{a2} is each independently a hydrocarbon group having 6 to 40 carbon atoms,
X^{a2} is a hydrogen atom, a monovalent organic group or a halogen atom,
Y^{a21} is -O- or -NH-
Y^{a22} is each independently a direct bond or a group composed of at least one selected from -O-, -C(=O)-, - S(=O)₂-, -NH- and -CH₂-,
Z is a direct bond or a divalent or trivalent hydrocarbon group having 1 to 5 carbon atoms, and
n is 1 or 2].
Y^{a22} and/or Z may not be a direct bond. Y^{a22} and Z may not be simultaneously a direct bond.

R^{a2} is preferably an aliphatic hydrocarbon group, particularly preferably a saturated aliphatic hydrocarbon group and especially preferably an alkyl group. In R^{a2}, the hydrocarbon group has preferably 12 to 30, for example, 16 to 26 or 15 to 26, in particular 18 to 22 or 17 to 22 carbon atoms.

X^{a2} may be a hydrogen atom, a methyl group, a halogen excluding a fluorine atom, a substituted or non-substituted benzyl group, or a substituted or non-substituted phenyl group. X^{a2} is preferably a hydrogen atom, a methyl group or a chlorine atom.

Y^{a22} may be -Y'-, -Y'-Y'-, -Y'-C(=O)-, -C(=O)-Y'-, - Y'-C(=O)-Y'-, -Y'-R'-, -Y'-R'-Y'-, -Y'-R'-Y'-C(=O)-, -Y'-R'-C(=O)-Y'-, -Y'-R'-Y'-C(=O)-Y'- or -Y'-R'-Y'-R'-, [wherein Y' is each independently a direct bond, -O-, - NH- or -S(=O)₂-, and
R' is -(CH₂)ₘ- (wherein m is an integer of 1 to 5), a linear hydrocarbon group having 1 to 5 carbon atoms and having an unsaturated bond, a hydrocarbon group having 1 to 5 carbon atoms and having a branched structure or - (CH₂)ₗ-C₆H₄-(CH₂)ₗ- (wherein l is each independently an integer of 0 to 5 and -C₆H₄- is a phenylene group)].

Specific examples of Y^{a22} include a direct bond, -O-, -NH-, -O-C(=O)-, -C(=O)-O-, -C(=O)-NH-, -NH-C(=O)-, -NH-S(=O)₂-, -S(=O)₂-NH-, -O-C (=O) -NH-, -NH-C (=O) -O-, -NH-C(=O)-NH-, -O-C₆H₄-, -NH-C₆H₄-, -O-(CH₂)ₘ-O-, -NH-(CH₂)ₘ-NH-, -O-(CH₂)ₘ-NH-, -NH-(CH₂)ₘ-O-, -O-(CH₂)ₘ-O-C(=O)-, -O-(CH₂)ₘ-C(=O)-O-, -NH-(CH₂)ₘ-O-C(=O)-, -NH-(CH₂)ₘ-C(=O)-O-, -O-(CH₂)ₘ-O-C (=O)-NH-, -O-(CH₂)ₘ-NH-C(=O)-O-, -O-(CH₂)ₘ-C(=O)-NH-, -O-(CH₂)ₘ-NH-C(=O)-, -O-(CH₂)ₘ-NH-C(=O)-NH-, - O-(CH₂)ₘ-O-C₆H₄-, -NH-(CH₂)ₘ-O-C(=O)-NH-, -NH-(CH₂)ₘ-NH-C(=O)-O-, -NH-(CH₂)ₘ-C(=O)-NH-, -NH-(CH₂)ₘ-NH-C(=O)-, -NH-(CH₂)ₘ-NH-C(=O)-NH-, -NH-(CH₂)ₘ-O-C₆H₄-, -NH-(CH₂)ₘ-NH-C₆H₄-[wherein m is an integer of 1 to 5].

Y^{a22} is preferably -O-, -NH-, -O-C(=O)-, -C(=O)-O-, - C(=O)-NH-, -NH-C(=O)-, -NH-S(=O)₂-, -S(=O)₂-NH-, -O-C(=O)-NH-, -NH-C(=O)-O-, -NH-C(=O)-NH-, -O-C₆H₄-. Y^{a22} is more preferably -NH-C(=O)-, -C(=O)-NH-, -O-C(=O)-NH-, - NH-C(=O)-O- or -NH-C(=O)-NH-. Y^{a22} may not be a direct bond.

Z is a direct bond or a divalent or trivalent hydrocarbon group having 1 to 5 carbon atoms, and may have a linear structure or a branched structure. Z has preferably 2 to 4, particularly preferably 2 carbon atoms. Specific examples of Z include a direct bond, - CH₂-, -CH₂CH₂-, -CH₂CH₂CH₂-, -CH₂CH₂CH₂CH₂-, - CH₂CH₂CH₂CH₂CH₂-, -CH₂CH(-)₂, -CH₂(CH-)CH₂-, -CH₂CH₂CH(-)₂, - CH₂CH₂CH₂CH₂CH(-)₂, -CH₂CH₂(CH-)CH₂- and -CH₂CH₂CH₂CH(-)₂. Z may not be a direct bond.

The monomer (a2) is preferably CH₂=C(-X^{a2}) -C (=O) -O-(CH₂)ₘ-NH-C(=O)-R^{a2}, CH₂=C(-X^{a2}) -C (=O)-O-(CH₂)ₘ-O-C(=O) -NH-R^{a2}, CH₂=C(-X^{a2}) -C (=O)-O- (CH₂)ₘ-NH-C(=O)-O-R^{a2}, CH₂=C(-X^{a2}) - C(=O)-O-(CH₂)ₘ-NH-C(=O)-NH-R^{a2} [wherein R^{a2} and X^{a2} are as described above].

The monomer (a2) is particularly preferably CH₂=C(-X^{a2})-C(=O)-O-(CH₂)ₘ-NH-C(=O)-R^{a2}.

The monomer (a2) may be produced by reacting hydroxyalkyl (meth)acrylate or hydroxyalkyl (meth)acrylamide with long chain alkyl isocyanate. Examples of long chain alkyl isocyanate include lauryl isocyanate, myristyl isocyanate, cetyl isocyanate, stearyl isocyanate, oleyl isocyanate and behenyl isocyanate.

The monomer (a2) may also be produced by reacting (meth)acrylate having an isocyanate group in the side chain, such as 2-methacryloyloxyethyl methacrylate, with long chain alkylamine or long chain alkyl alcohol. Examples of long chain alkylamine include laurylamine, myristylamine, cetylamine, stearylamine, oleylamine and behenylamine. Examples of long chain alkyl alcohol include lauryl alcohol, myristyl alcohol, cetyl alcohol, stearyl alcohol, oleyl alcohol and behenyl alcohol.

Preferred examples of monomers (a) are as follows:
Stearyl (meth)acrylate, behenyl (meth)acrylate, stearyl α-chloroacrylate, behenyl α-chloroacrylate;
Stearyl (meth)acrylamide, behenyl (meth)acrylamide; 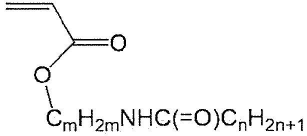 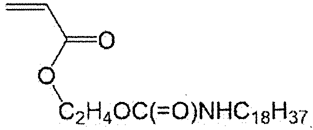 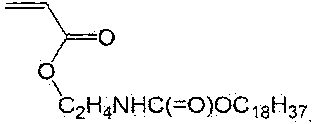 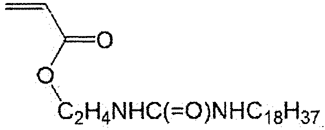 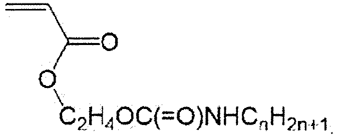 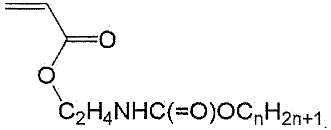 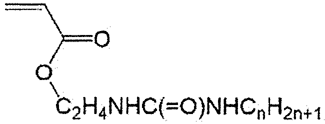 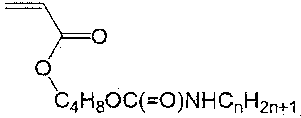 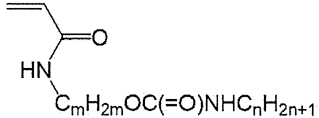 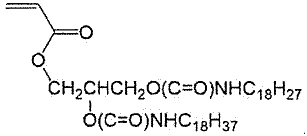 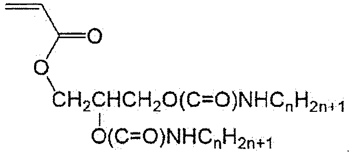 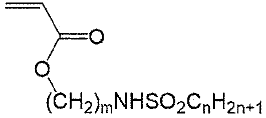 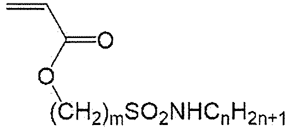
[wherein n is a number of 6 to 40 and m is a number of 1 to 5].

The compounds of the above formula are an acrylic compound having a hydrogen atom at the α position, and specific examples thereof may include a methacrylic compound having a methyl group at the α position and an α-chloroacrylic compound having a chlorine atom at the α position.

The monomer (a2) is preferably an amide-group containing monomer represented by the formula:

R^{a22-C}(=O)-NH-R^{a23}-O-R^{a21}

[wherein R^{a21} is an organic residue having an ethylenically unsaturated polymerizable group,
R^{a22} is a hydrocarbon group having 6 to 40 carbon atoms, and
R^{a23} is a hydrocarbon group having 1 to 5 carbon atoms].

R^{a21} is an organic residue having an ethylenically unsaturated polymerizable group, and is not limited as long as it has a carbon-carbon double bond. Specific examples thereof include an organic residue having an ethylenically unsaturated polymerizable group, such as - C(=O)CR^{a211}=CH₂, -CHR^{a211}=CH₂ and -CH₂CHR^{a211}=CH₂, wherein R^{a211} is a hydrogen atom or an alkyl group having 1 to 4 carbon atoms. R^{a21} may have various organic groups other than the ethylenically unsaturated polymerizable group, including, for example, an organic group such as chain hydrocarbon, cyclic hydrocarbon, a polyoxyalkylene group and a polysiloxane group. These organic groups may be substituted by various substituents. R^{a21} is preferably - C (=O) CR^{a211}=CH₂.

R^{a22} is a hydrocarbon group having 6 or more and 40 or less carbon atoms, and preferably an alkyl group, a chain hydrocarbon group, and a cyclic hydrocarbon group. Of them, a chain hydrocarbon group is preferred, and a linear saturated hydrocarbon group is particularly preferred. R^{a22} has 6 or more and 40 or less, preferably 11 to 27, and particularly preferably 15 to 23 carbon atoms.

R^{a23} is a hydrocarbon group having 1 to 5 carbon atoms, preferably an alkyl group. The hydrocarbon group having 1 to 5 carbon atoms may be linear or branched, and may have an unsaturated bond, and is preferably linear. R^{a23} has preferably 2 to 4, and particularly preferably 2 carbon atoms. R^{a23} is preferably an alkylene group.

The amide group-containing monomer may be a monomer with only one type of R^{a22} (e.g., a compound with only R^{a22} having 17 carbon atoms), or a monomer in which more than one R^{a22}'s are combined (e.g., a mixture of a compound with R^{a22} having 17 carbon atoms and a compound with R^{a22} having 15 carbon atoms).

Examples of amide group-containing monomers include carboxylic acid amide alkyl (meth)acrylate.

Specific examples of amide group-containing monomers include palmitic acid amide ethyl (meth)acrylate, stearic acid amide ethyl (meth)acrylate, behenic acid amide ethyl (meth)acrylate, myristic acid amide ethyl (meth)acrylate, lauric acid amide ethyl (meth)acrylate, isostearic acid ethylamide (meth)acrylate, oleic acid ethylamide (meth)acrylate, t-butyl cyclohexylcaproic acid amide ethyl (meth)acrylate, adamantanecarboxylic acid ethylamide (meth)acrylate, naphthalenecarboxylic acid amide ethyl (meth)acrylate, anthracenecarboxylic acid amide ethyl (meth)acrylate, palmitic acid amide propyl (meth)acrylate, stearic acid amide propyl (meth)acrylate, palmitic acid amide ethyl vinyl ether, stearic acid amide ethyl vinyl ether, palmitic acid amide ethyl allyl ether, stearic acid amide ethyl allyl ether and a mixture thereof.

It is preferable that the amide group-containing monomer is stearic acid amide ethyl (meth)acrylate. The amide group-containing monomer may be a mixture containing stearic acid amide ethyl (meth)acrylate. The amount of stearic acid amide ethyl (meth)acrylate in the mixture containing stearic acid amide ethyl (meth)acrylate may be, for example, 40% by weight or more, 50% by weight or more, 60% by weight or more, or 70% by weight or more, and 90% by weight or less, 80% by weight or less, or 70% by weight or less relative to the total weight of the amide group-containing monomers. The rest of the monomers may be, for example, palmitic acid amide ethyl (meth)acrylate.

The amount of the monomer (a2) out of the monomers (a) may be 10% by weight or more, 20% by weight or more, 30% by weight or more, 40% by weight or more, 50% by weight or more, 60% by weight or more, 70% by weight or more, or 80% by weight or more, and preferably 30% by weight or more.

### {(b) Multi-carbonyl Monomer}

The acrylic polymer may comprise a repeating unit derived from a multi-carbonyl monomer (b) having one ethylenically unsaturated double bond and two or more carbonyl groups.

The multi-carbonyl monomer (b) may be represented by the following formula:

CH₂=C(-X^{b1})-C(=O)-Y^{b1}-R^{b1}-R^{b2}

wherein X^{b1} is a hydrogen atom, a monovalent organic group or a halogen atom,
Y^{b1} is -O- or -NH-
R^{b1} is a divalent hydrocarbon group having 1 to 10 carbon atoms, and
R^{b2} is a group having one or more carbonyl groups.

X^{b1} may be a hydrogen atom, a methyl group, a halogen excluding a fluorine atom, a substituted or non-substituted benzyl group, or a substituted or non-substituted phenyl group. X^{b1} is preferably a hydrogen atom, a methyl group or a chlorine atom.

Y^{b1} is -O- or -NH-, and for example, -O-.

R^{b1} is a divalent hydrocarbon group having 1 to 10 (for example, 1 to 6) carbon atoms. R^{b1} is preferably an aliphatic group. R^{b1} may be chain (linear or branched) or cyclic, and preferably chain, in particular, linear. R^{b1} may be unsaturated or saturated, and preferably saturated.

R^{b1} is a divalent hydrocarbon group having 1 to 10 (for example, 1 to 6) carbon atoms. R^{b1} is preferably an aliphatic group. R^{b1} may be chain (linear or branched) or cyclic, and preferably chain, in particular, linear. R^{d1} may be unsaturated or saturated, and preferably saturated.

R^{b2} is a group having one or more carbonyl groups. R^{b2} may have 1 or more, 2 or more, or 3 or more carbonyl groups, and 4 or less, 3 or less, 2 or less, or 1, and preferably 1 or 2 carbonyl groups. R^{b2} may have 1 to 20 carbon atoms, and 1 or more, 3 or more, or 5 or more carbon atoms, and 20 or less, 15 or less, 10 or less, or 5 or less carbon atoms. Specific examples of R^{b2} include a group represented by -CO-R^{b21} (wherein R^{b21} is α monovalent hydrocarbon group having 1 to 6 (for example, 1 to 4 or 1 or 2) carbon atoms, a group represented by - NH-CO-NH₂, and a 2-(2-oxo-1-imidazolidinyl) group.

Specific examples of monomers (b) include diacetone acrylamide, 2-methylpropenoic acid [2-(2-oxo-2-imidazolidinyl)ethyl], N-[2-(2-oxoimidazolidin-3-yl)ethyl] methacrylamide and 2-acetoacetoxyethyl(meth)acrylate. Of them, diacetone acrylamide and 2-methylpropenoic acid [2-(2-oxo-2-imidazolidinyl)ethyl] are preferred as the above component (A2) from the viewpoint of the durable water-repellency of textile products.

### {(c) Halogenated Olefin Monomer (d)}

The acrylic polymer may comprise a repeating unit derived from a halogenated olefin monomer (c). The halogenated olefin monomer (c) may not have a fluorine atom. The halogenated olefin monomer is preferably an olefin having 2 to 20 carbon atoms and substituted by 1 to 10 chlorine atoms, bromine atoms or iodine atoms. The halogenated olefin monomer (c) is preferably chlorinated olefin having 2 to 20 carbon atoms, and particularly preferably chlorinated olefin having 2 to 5 carbon atoms and 1 to 5 chlorine atoms. Preferred examples of halogenated olefin monomers include halogenated vinyl such as vinyl chloride, vinyl bromide, vinyl iodide and halogenated vinylidene such as vinylidene chloride, vinylidene bromide and vinylidene iodide. Vinyl chloride and vinylidene chloride are preferred because they increase water-repellency, in particular, durability of water-repellency. The presence of the repeating unit derived from a halogenated olefin monomer (c) can improve wash durability provided by the water-repellent compound.

### {(d) Cross-linkable Monomer}

The acrylic monomer may comprise a cross-linkable monomer (d), and the cross-linkable monomer (d) has at least two reactive groups and/or an ethylenically unsaturated double bond (preferably a (meth)acrylate group). The cross-linkable monomer (e) may be a monomer containing no fluorine atoms. It may be a compound containing no fluorine atoms. The cross-linkable monomer (d) may be a compound having at least two ethylenically unsaturated double bonds (preferably a (meth)acrylate group), or a compound having at least one ethylenically unsaturated double bond and at least one reactive group. Examples of reactive groups include a hydroxyl group, an epoxy group, chloromethyl group, a blocked isocyanate group, an amino group and a carboxyl group.

The crosslinkable monomer (d) may be mono(meth)acrylate, di(meth)acrylate or di(meth)acrylamide having a reactive group.

An example of the crosslinkable monomer (d) is a vinyl monomer having a reactive group.

Examples of crosslinkable monomers (d) include, but are not limited to, 3-chloro-2-hydroxypropyl(meth)acrylate, butadiene, isoprene, chloroprene, vinyl monochloroacetate, vinyl methacrylate, glycidyl (meth)acrylate, 1,4-butanediol di(meth)acrylate, 1,6-hexanediol di(meth)acrylate, 1,9-nonanediol di(meth)acrylate and neopentylglycol di(meth)acrylate.

### {(e) Cyclic Hydrocarbon Group-containing Monomer}

The acrylic polymer may comprise a cyclic hydrocarbon group-containing monomer (e). The cyclic hydrocarbon group-containing monomer (e) has a cyclic hydrocarbon group, and may have an ethylenically unsaturated double bond and a cyclic hydrocarbon group.

The cyclic hydrocarbon group-containing monomer (e) preferably has a (meth)acrylic group as the ethylenically unsaturated double bond, and for example, may have a (meth)acrylate group or a (meth)acrylamide group as the ethylenically unsaturated double bond.

The cyclic hydrocarbon group may be alicyclic or aromatic, and is preferably alicyclic. The cyclic hydrocarbon group may be saturated or unsaturated, and is preferably saturated. The cyclic hydrocarbon group may be a monocyclic group, a polycyclic group, or a bridged-ring group, and is preferably a bridged-ring group. The cyclic hydrocarbon group may have a chain group (e.g., a linear or branched hydrocarbon group).

The cyclic hydrocarbon group may have 4 or more, 6 or more, or 8 or more, and 30 or less, 26 or less, 22 or less, 18 or less, or 14 or less carbon atoms.

Specific examples of cyclic hydrocarbon groups include a cyclohexyl group, a t-butylcyclohexyl group, an adamantyl group, a 2-methyl-2-adamantyl group, a 2-ethyl-2-adamantyl group, a bornyl group, an isobornyl group, a norbornyl group, a dicyclopentanyl group, a dicyclopentenyl group, a benzyl group, a phenyl group, a naphthyl group, a 2-t-butylphenyl group, a residue formed by eliminating one or more hydrogen atoms from those groups (e.g., a cyclohexylene group, an adamantylene group, a phenylene group and a naphthylene group), and a substituted group thereof.

Specific examples of cyclic hydrocarbon group-containing monomers (e) include cyclohexyl(meth)acrylate, t-butylcyclohexyl(meth)acrylate, benzyl (meth)acrylate, isobornyl (meth)acrylate, dicyclopentanyl(meth)acrylate, dicyclopentenyl (meth)acrylate, dicyclopentanyloxyethyl (meth)acrylate, tricyclopentanyl (meth)acrylate, adamantyl (meth)acrylate, 2-methyl-2-adamantyl (meth)acrylate, 2-ethyl-2-adamantyl (meth)acrylate and a compound in which such acrylate is substituted with acrylamide. These may be used alone, or two or more of them may be used in combination.

### {(f) Hydrophilic Group-containing Monomer}

The acrylic polymer may comprise a hydrophilic group-containing monomer (f). The monomer (f) has a hydrophilic group. The hydrophilic group is preferably an oxyalkylene group (in which the alkylene group has 2 to 6 carbon atoms), and particularly preferably an oxyethylene group. The monomer (f) is preferably oxyalkylene (meth)acrylate, for example, polyalkylene (or monoalkylene) glycol mono(meth)acrylate and/or polyalkylene (or monoalkylene) glycol di(meth)acrylate, polyalkylene (or monoalkylene) glycol mono(meth)acrylamide.

The monomer (f) is preferably oxyalkylene (meth)acrylate represented by the formula:

CH₂=CX^{f}C (=O) -Y^{f}-(R^{f}O)ₙ-A^{f}

wherein X^{f} is a hydrogen atom or a methyl group,
Y^{f} is -O- or -NH-,
R^{f} is each independently an alkylene group having 2 to 6 carbon atoms,
A^{f} is a hydrogen atom, an unsaturated or saturated hydrocarbon group having 1 to 22 carbon atoms or CH₂=CX^{f}C(=O)-, and
n is an integer of 1 to 90.

Examples of monomer (f) are preferably those represented by the formula:

CH₂=CX^{f}C (=O) -O- (R^{f}O)ₙ-A^{fi} ( f1)

CH₂=CX^{f}C (=O)-O- (R^{f}O)ₙ-C(=O)CX^{f}=CH₂ (f2),

CH₂=CX^{f}C (=O) -NH- (R^{f}O)ₙ-A^{fi} (f3)

[wherein X^{f} is each independently a hydrogen atom or a methyl group,
A^{fi} is each independently a hydrogen atom or an unsaturated or saturated hydrocarbon group having 1 to 22 carbon atoms,
R^{f} is each independently an alkylene group having 2 to 6 carbon atoms, and
n is an integer of 1 to 90.]

n may be 1 or more, 2 or more, or 3 or more, and 50 or less, 30 or less, or 15 or less. Or, n may be, for example, 1.

R^{f} may be a linear or branched alkylene group, and may be, for example, a group represented by the formula - (CH₂)ₓ- or -(CH₂)ₓ₁-(CH(CH₃))ₓ₂- wherein x1 and x2 are 0 to 6, for example, 2 to 5, and the sum of x1 and x2 is 1 to 6, and the order of -(CH₂)ₓ₁- and -(CH(CH₃))ₓ₂- is not limited to the order in the formula described, and may be random.

In -(R^{f}O)ₙ-, there may be 2 or more types of Rs (e.g., 2 to 4 types, in particular, 2 types). -(R^{f}O)ₙ-may be, for example, a combination of -(R¹O)ₙ₁- and - (R²O)ₙ₂- wherein R¹ and R² are different from each other and are an alkylene group having 2 to 6 carbon atoms, n1 and n2 are a number of 1 or more, and the sum of n1 and n2 is 2 to 90.

In the formulas (f1), (f2) and (f3), R^{f} is preferably an ethylene group, a propylene group or a butylene group, and particularly preferably a butylene group. In the formulas (f1), (f2) and (f3), R^{f} may be a combination of two or more alkylene groups. In that case, at least one R is preferably an ethylene group, a propylene group or a butylene group. Examples of combinations of R^{f} include a combination of an ethylene group/ a propylene group, a combination of an ethylene group/ a butylene group and a combination of a propylene group/ a butylene group. The monomer (f) may be a mixture of two or more. In that case, at least one of the monomers (f) is preferably a monomer in which R^{f} in the formulas (f1), (f2) and (f3) is an ethylene group, a propylene group or a butylene group. When polyalkylene glycol di(meth)acrylate represented by the formula (f2) is used, using only polyalkylene glycol di(meth)acrylate as the monomer (f) is not preferred, and using it together with the monomer (f1) is preferred. Even in that case, it is preferable to keep the proportion of the compound represented by the formula (f2) at less than 30% in the monomers (f) used.

Acrylate and acrylamide in which X² is a hydrogen atom are preferred as the monomer (f). The monomer (f) is particularly preferably hydroxyethyl acrylate, hydroxypropyl acrylate, hydroxybutyl acrylate or hydroxyethyl acrylamide.

### {Ion Donor Group-containing Monomer}

The acrylic polymer may comprise an ion donor group-containing monomer (g). The monomer (g) is preferably a monomer having an olefinic carbon-carbon double bond and an ion donor group (in particular, an acrylic monomer). The ion donor group is an anion donor group and/ or a cation donor group.

Examples of monomers having an anion donor group include a monomer having a carboxyl group, a sulfonic acid group or a phosphate group. Specific examples of monomers having an anion donor group include (meth)acrylic acid, crotonic acid, maleic acid, fumaric acid, itaconic acid, citraconic acid, vinylsulfonic acid, (meth)allylsulfonic acid, styrene sulfonic acid, phosphoric acid (meth)acrylate, vinylbenzene sulfonic acid, acrylamide t-butylsulfonic acid and a salt thereof.

Examples of salts of the anion donor group include alkaline metal salt, alkaline earth metal salt, and an ammonium salt such as methyl ammonium salt, ethanol ammonium salt and triethanol ammonium salt.

In the monomer having a cation donor group, examples of cation donor groups include an amino group, which is preferably a tertiary amino group and a quaternary amino group. It is preferable that in the tertiary amino group, two groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 to 25 carbon atoms (in particular an aralkyl group, e.g., a benzyl group (C₆H₅-CH₂-)). It is preferable that in the quaternary amino group, three groups bonded to a nitrogen atom, which are the same or different, are an aliphatic group having 1 to 5 carbon atoms (in particular alkyl group), an aromatic group having 6 to 20 carbon atoms (an aryl group), or an aromatic aliphatic group having 7 or more and 25 or less carbon atoms (in particular an aralkyl group, e.g., benzyl group (C₆H₅-CH₂-)). In the tertiary amino group and the quaternary amino group, the last group bonded to the nitrogen atom may have a carbon-carbon double bond. The cation donor group may be in the form of salt.

The cation donor group in the form of salt is a salt with an acid (an organic acid or an inorganic acid). An organic acid such as a carboxylic acid having 1 to 20 carbon atoms (in particular, a monocarboxylic acid such as acetic acid, propionic acid, butyric acid and stearic acid) is preferred. Dimethylaminoethyl (meth)acrylate, diethylaminoethyl (meth)acrylate and a salt thereof are preferred.

Methacrylic acid, acrylic acid and dimethylaminoethyl methacrylate are preferred, and methacrylic acid and dimethylaminoethyl methacrylate are more preferred as the ion donor group-containing monomer (g).

### {(h) Other Monomers}

Other monomers are not limited to those examples, and include acrylonitrile, organosiloxane-containing (meth)acrylate, short-chain alkyl (meth)acrylate, vinyl acetate, styrene, α-methylstyrene, p-methylstyrene and vinyl alkyl ether. Other monomers (h) may be used alone, or two or more of them may be used in combination.

### {Composition of Polymer}

The combination of the monomers (a) to (h) constituting the repeating unit of the acrylic polymer is not limited. It is preferable that the acrylic polymer comprises a repeating unit derived from the monomer (b) and/or a repeating unit derived from the monomer (c) in addition to the repeating unit derived from the monomer (a). When the acrylic polymer is used for a textile product, preferably the monomer (a), the monomer (d), the monomer (e) and the monomer (g) are used together as the monomer.

The amount of the repeating unit derived from the monomer (a) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, preferably 25% by weight or more, more preferably 50% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (b) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (b) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

The amount of the repeating unit derived from the monomer (c) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (c) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

The amount of the repeating unit derived from the monomer (d) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (d) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

The amount of the repeating unit derived from the monomer (e) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (e) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

The amount of the repeating unit derived from the monomer (f) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (f) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

The amount of the repeating unit derived from the monomer (g) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (g) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

The amount of the repeating unit derived from the monomer (h) may be 1% by weight or more, 5% by weight or more, 10% by weight or more, 20% by weight or more, 30% by weight or more, 40% by weight or more, 50% by weight or more, 60% by weight or more, 70% by weight or more, 80% by weight or more, or 90% by weight or more, and 95% by weight or less, 85% by weight or less, 75% by weight or less, 65% by weight or less, 55% by weight or less, 45% by weight or less, 35% by weight or less, 25% by weight or less, 15% by weight or less, or 5% by weight or less relative to the acrylic polymer.

The amount of the repeating unit derived from the monomer (h) may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, 100 parts by weight or more, 300 parts by weight or more, 500 parts by weight or more, 1,000 parts by weight or more, and 3,000 parts by weight or less, 2,000 parts by weight or less, 1,000 parts by weight or less, 750 parts by weight or less, 500 parts by weight or less, 300 parts by weight or less, 200 parts by weight or less, 100 parts by weight or less, 50 parts by weight or less, 30 parts by weight or less, 10 parts by weight or less, or 1 part by weight or less relative to 100 parts by mass of the repeating unit derived from the monomer (a).

### {Polymerization Method}

The acrylic polymer may be polymerized by a known polymerization method, and conditions of polymerization reaction may be optionally selected. Examples of polymerization methods include solution polymerization, suspension polymerization, emulsion polymerization, and condensation polymerization.

Solution polymerization uses a method in which monomer is dissolved in an organic solvent in the presence of a polymerization initiator, and after nitrogen replacement, the mixture is heated and stirred at 30 to 120°C for 1 to 10 hours. Examples of polymerization initiators include azobisisobutyronitrile, benzoyl peroxide, di-t-butyl peroxide, lauryl peroxide, cumene hydroperoxide, t-butyl peroxypivalate and diisopropyl peroxydicarbonate. 0.01 to 20 parts by weight, for example, 0.01 to 10 parts by weight of polymerization initiator is used relative to 100 parts by weight of the monomer.

Organic solvents are inert to monomers and dissolves them. Examples thereof include ester (e.g., ester having 2 to 40 carbon atoms such as ethyl acetate and butyl acetate), ketone (e.g., ketone having 2 to 40 carbon atoms such as methyl ethyl ketone, diisobutyl ketone and methyl isobutyl ketone), alcohol (e.g., alcohol having 1 to 40 carbon atoms such as ethanol, butanol and isopropyl alcohol). Specific examples of solvents include acetone, chloroform, HCHC225, isopropyl alcohol, cyclohexane, benzene, toluene, xylene, petroleum ether, tetrahydrofuran, 1,4-dioxane, methyl ethyl ketone, methyl isobutyl ketone, diisobutyl ketone, ethyl acetate, butyl acetate, 1,1,2,2-tetrachloroethane, 1,1,1-trichloroethane, trichloroethylene, perchloroethylene, tetrachlorodifluoroethane and trichlorotrifluoroethane. 10 to 3,000 parts by weight, for example, 50 to 2,000 parts by weight of organic solvent is used relative to 100 parts by weight of the monomer.

Emulsion polymerization uses a method in which monomer is emulsified in water in the presence of a polymerization initiator and an emulsifier, and after nitrogen replacement, the monomer is polymerized by stirring at 50 to 80°C for 1 to 20 hours. As the polymerization initiator, a water-soluble initiator such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, sodium peroxide, potassium persulfate and ammonium persulfate, and an oil-soluble initiator such as azobisisobutyronitrile, benzoyl peroxide, di-t-butylperoxide, lauryl peroxide, cumene hydroperoxide, t-butyl peroxypivalate and diisopropyl peroxydicarbonate. 0.01 to 10 parts by weight of polymerization initiator is used relative to 100 parts by weight of the total amount of the monomers.

To obtain a water dispersion of polymer having excellent standing stability, it is desirable to perform polymerization by forming fine particles of monomers in water by using an emulsification device which can offer high crush energy, such as a high pressure homogenizer and a ultrasonic homogenizer. The emulsifier may be anionic, cationic or nonionic, and 0.5 to 20 parts by weight of the emulsifier may be used relative to 100 parts by weight of the monomer. It is preferable to use an anionic and/or nonionic and/or cationic emulsifier. If monomers are not completely dissolved, it is preferable to add a compatibilizer which dissolves the monomers sufficiently, such as a water-soluble organic solvent or a low molecular weight monomer. Addition of the compatibilizer improves emulsifiability and copolymerizability.

The aqueous organic solvent may be the above organic solvent. Examples thereof include acetone, methyl ethyl ketone, ethyl acetate, propylene glycol, dipropylene glycol monomethyl ether, dipropylene glycol, tripropylene glycol and ethanol. 1 to 50 parts by weight, for example, 10 to 40 parts by weight of the organic solvent may be used relative to 100 parts by weight of water. Examples of low molecular weight monomers include methyl methacrylate, glycidyl methacrylate and 2,2,2-trifluoroethyl methacrylate. 1 to 50 parts by weight, for example, 10 to 40 parts by weight of the low molecular weight monomer may be used relative to 100 parts by weight of the total amount of the monomers.

A chain transfer agent may also be used in polymerization. The molecular weight of the polymer can be changed depending on the amount of use of the chain transfer agent. Examples of chain transfer agents include a mercaptan group-containing compound, in particular, alkyl mercaptan having 1 to 40 carbon atoms, such as lauryl mercaptan, thioglycol and thioglycerol, and an inorganic salt such as sodium hypophosphite and sodium hydrogen sulfide. 0.01 to 10 parts by weight, for example, 0.1 to 5 parts by weight of the chain transfer agent may be used relative to 100 parts by weight of the total amount of the monomers.

### <Isocyanate derivative>

In the present disclosure, an isocyanate derivative may be used as the water-repellent compound. The isocyanate derivative has a hydrocarbon group having 6 or more and 40 or less carbon atoms.

The isocyanate derivative is a compound obtained by the reaction between an active hydrogen compound and a raw material isocyanate, and comprises a moiety derived from the active hydrogen-containing compound and a moiety derived from the raw material isocyanate. The isocyanate derivative usually has no isocyanate group unlike isocyanate curing agents.

The isocyanate derivative has -NHCO- which is formed by the reaction between an active hydrogen compound and a raw material isocyanate (in this regard, -NHCO- may be a moiety of a urethane group or a urea group). -NHCO- is a group formed by reacting an active hydrogen-containing group (typically a hydroxy group) of the active hydrogen compound and an active hydrogen-reactive group (typically an isocyanate group) of the raw material isocyanate. The isocyanate derivative is typically urethane (in particular, polyurethane).

The hydrocarbon group having 6 or more and 40 or less carbon atoms in the isocyanate derivative may be a monovalent hydrocarbon group. The hydrocarbon group may be an aromatic hydrocarbon group or an aliphatic hydrocarbon group, and may be an aliphatic hydrocarbon group, and in particular a saturated aliphatic hydrocarbon group (an alkyl group). The hydrocarbon group may be branched, cyclic or linear, and preferably chain, in particular, linear. The hydrocarbon group may have 6 or more, 8 or more, 10 or more, 12 or more, 14 or more, 16 or more, 18 or more, 20 or more, or 22 or more, and preferably 10 or more, 12 or more, or 16 or more carbon atoms, and may have 40 or less, 35 or less, 30 or less, 25 or less, 20 or less, 15 or less, or 10 or less, and preferably 30 or less, 25 or less, or 20 or less carbon atoms.

The isocyanate derivative may have a weight average molecular weight of 3,000 or more, 5,000 or more, 10,000 or more, 30,000 or more, 100,000 or more, 300,000 or more, or 500,000 or more, and 1,000,000 or less, 750,000 or less, 500,000 or less, 300,000 or less, 100,000 or less, 75,000 or less, 50,000 or less, 30,000 or less, 10,000 or less, or 5,000 or less.

The isocyanate derivative may have a water contact angle of 50° or more, 55° or more, 65° or more, 75° or more, 85° or more, 90° or more, 100° or more, or 105° or more, 110° or more, or 115° or more, and 160° or less, 140° or less, 130° or less, 120° or less, 110° or less, 100° or less, or 90° or less. A water contact angle of the isocyanate derivative of the lower limit or more can impart good water-repellency to a substrate. The water contact angle is a static contact angle of the isocyanate derivative to a spin-coated film, which is obtained by dropping 2 µL of water on a spin-coated film and measuring the contact angle one second after the droplet reaches the film.

### {Active Hydrogen Compound}

The active hydrogen compound comprises an active hydrogen group which reacts with an isocyanate group.

Examples of active hydrogen groups include a hydroxy group, an amino group and a carboxyl group, and the active hydrogen group is typically a hydroxy group.

### [(α1) Hydrocarbon Alcohol]

The active hydrogen compound may be an active hydrogen compound (α1) composed of a hydrocarbon group and hydroxy.

The hydrocarbon group in the active hydrogen compound (α1) is the hydrocarbon group having 6 or more and 40 or less carbon atoms described above, and the same explanation above applies.

Furthermore, the active hydrogen compound (α1) preferably has one hydroxy group per molecule.

Examples of active hydrogen compounds (α1) include a linear saturated hydrocarbon group-containing alcohol such as n-tridecanol, n-tetradecanol, n-pentadecanol, n-hexadecanol, n-heptadecanol, n-octadecanol (stearyl alcohol), n-nonadecanol and eicosanol; branched saturated hydrocarbon group-containing alcohol such as isomyristyl alcohol, isocetyl alcohol, isostearyl alcohol and isoicosyl alcohol; a linear unsaturated hydrocarbon group-containing alcohol such as tetradecenyl alcohol, hexadecenyl alcohol, oleyl alcohol, isocenyl alcohol, docosenyl alcohol, tetracosenyl alcohol, hexacosenyl alcohol and octacosenyl alcohol; and branched unsaturated hydrocarbon group-containing active hydrogen compound such as phytol.

Herein, the linear saturated hydrocarbon group-containing alcohol and the linear unsaturated hydrocarbon group-containing alcohol may be used together. When the linear saturated hydrocarbon group-containing alcohol and the linear unsaturated hydrocarbon group-containing alcohol are used together, the mixing ratio of the linear saturated hydrocarbon group-containing alcohol is for example, 40 parts by mass or more, preferably 55 parts by mass or more, more preferably 70 parts by mass or more, and for example 90 parts by mass or less, and preferably 80 parts by mass or less relative to 100 parts by weight of the total amount of the linear saturated hydrocarbon group-containing alcohol and the linear unsaturated hydrocarbon group-containing alcohol. Furthermore, the mixing ratio of the linear unsaturated hydrocarbon group-containing alcohol is, for example, 10 parts by mass or more, and preferably 20 parts by mass or more, and for example 60 parts by mass or less, preferably 45 parts by mass or less, and more preferably 30 parts by mass or less relative to 100 parts by weight of the total amount of the linear saturated hydrocarbon group-containing alcohol and the linear unsaturated hydrocarbon group-containing alcohol. When the mixing ratio of the linear saturated hydrocarbon group-containing alcohol is the above lower limit or more, the crystallinity of hydrocarbon groups is improved, and as a result the water-repellency of the object to be treated with the water-repellent composition may be improved.

### [(α2) Modified Body of Sugar Alcohol/Hydroxy Acid]

The active hydrogen compound may be a modified body of sugar alcohol/ hydroxy acid (α2), which is sugar alcohol/ hydroxy acid (sugar alcohol and/or hydroxy acid) modified with a hydrocarbon group having 6 or more and 40 or less. The type of sugar alcohol/ hydroxy acid is not limited, and may be a cyclic or acyclic. Examples of sugar alcohols include monosaccharide, reducing sugar, amino sugar, aldonic acid and aldonolactone. Examples of hydroxy acids include hydroxy polyvalent carboxylic acid. Sugar alcohol/ hydroxy acid may be a substance existing in a living body. Examples of sugar alcohols/ hydroxy acids include, but are not limited to, a compound derived from aldose and ketose, such as tetrose, pentose, hexose and heptose. Specific examples thereof include glucose, glyceraldehyde, erythrose, arabinose, ribose, arabinose, allose, altrose, mannose, xylose, lyxose, gulose, galactose, talose, fructose, ribulose, mannoheptulose, sedoheptulose, threose, erythritol, threitol, glucopyranose, mannopyranose, talopyranose, allopyranose, altropyranose, idopyranose, gulopyranose, glucitol, mannitol, erythritol, sorbitol, arabitol, xylitol, ribitol, galactitol, fucitol, iditol, inositol, pentaerythritol, dipentaerythritol, volemitol, gluconic acid, glyceric acid, xylonic acid, galactaric acid, ascorbic acid, citric acid, gluconolactone, glyceric acid lactone, xylonic acid lactone, glucosamine, galactosamine and a mixture thereof. Sugar alcohol/ hydroxy acid may have 2 or more, 4 or more, or 6 or more, and 30 or less, 20 or less, or 10 or less carbon atoms. The compound (α2) has an average OH value of more than 0 to about 230, preferably about 10 to about 175, and most preferably about 25 to about 140.

The modified body of sugar alcohol/ hydroxy acid (α2) may have 1 or more, 2 or more, 3 or more, 4 or more, or 5 or more hydrocarbon groups having 6 or more and 40 or less carbon atoms. The modified body of sugar alcohol/ hydroxy acid (α2) may have 12 or less, 9 or less, 6 or less or 3 or less hydrocarbon groups having 6 or more and 40 or less carbon atoms.

In the modified body of sugar alcohol/ hydroxy acid (α2), at least one active hydrogen (for example, hydrogen in the OH group and the carboxyl group) possessed by the sugar alcohol and/or hydroxy acid may be substituted by an active hydrogen-substituting group selected from -R^{α2}, -C(O)R^{α2}, -(CH₂CH₂O)ₙ(CH(CH₃)CH₂O)ₘR^{α2}, - (CH₂CH₂O)ₙ(CH(CH₃)CH₂O)ₘC(O)R^{α2} and a mixture thereof . Here R^{α2} is a hydrogen atom or a hydrocarbon group having 6 or more and 40 or less carbon atoms, n is each independently 0 to 20, m is each independently 0 to 20, and m + n may be more than 0. The compound (α2) has at least one active hydrogen. In the modified body of sugar alcohol/ hydroxy acid, at least one (one or more) active hydrogens in sugar alcohol/ hydroxy acid may be unmodified. These active hydrogens (for example, an -OH group) may be allowed to react with the active hydrogen reactive group (in particular, an isocyanate group) in the compound (b) to form -NHCO-.

### ((α21) Modified body of sorbitan)

The modified body of sugar alcohol/ hydroxy acid (α2) may be a modified body of sorbitan (α21), which is sorbitan modified with a hydrocarbon group having 6 or more and 40 or less carbon atoms, and may be, in particular, alkyl sorbitan, and may be a compound obtained by substituting sorbitan with -R^{α2}, -C(O)R^{α2}, - (CH₂CH₂O)ₙ(CH(CH₃)CH₂O)ₘR^{α2}, -(CH₂CH₂O)ₙ(CH(CH₃)CH₂O)ₘC(O)R^{α2} or a mixture thereof (wherein R^{α2} is a hydrocarbon group having 6 or more and 40 carbon atoms). The modified body of sorbitan may be, for example, sorbitan monosubstituted, disubstituted, or trisubstituted with - C(O)R^{α2}. In this regard, sorbitan may include an amount of sorbitol, isosorbide, or other intermediate products or by-products thereof. A commercially available sorbitan such as SPAN may be used as the above alkyl sorbitan.

In an embodiment, at least one active hydrogen-substituting group may be -C(O)R^{α2}, and R^{α2} may be a linear · branched alkyl group having 6 to 40, more preferably 7 to 21, and most preferably 11 to 21 carbon atoms. Preferred compounds include a monosubstituted, disubstituted, or trisubstituted sorbitan derived from caprylic acid, capric acid, lauric acid, myristic acid, palmitic acid, stearic acid, arachidic acid, behenic acid, lignoceric acid and a mixture thereof. More preferred compounds include monosubstituted, disubstituted or trisubstituted sorbitan stearate and sorbitan behenin.

In an embodiment, R^{α2} may have at least one unsaturated bond. Examples of such compounds (in which at least one active hydrogen-substituting group is selected from -C(O)R^{α2} and R^{α2} has at least one unsaturated bond) include, but are not limited to, sorbitan trioleate (in which R^{α2} is -C₇H₁₄CH=CHC₈H₁₇). Other examples include, but are not limited to, a monosubstituted, disubstituted or trisubstituted sorbitan derived from palmitoleic acid, linoleic acid, arachidonic acid and erucic acid.

In an embodiment, the modified body of sorbitan (α21) has at least one active hydrogen-substituting group. The active hydrogen-substituting group may be independently -(CH₂CH₂O)ₙ(CH(CH₃)CH₂O)ₘR^{α2} or-(CH₂CH₂O)ₙ(CH(CH₃)CH₂O)ₘC(O)R^{α2,} and m is each independently 0 to 20, n is each independently 0 to 20, and m+n is more than 0). This compound is known as polysorbate and sold under the tradename TWEEN. Those sorbitans may be monosubstituted, disubstituted or trisubstituted by R^{α2}. Commercially available polysorbates are known to include a wide variety of compounds such as polysorbate in which each R^{α2} is H (non-substituted) and polysorbate in which each R^{α2} is a linear or branched alkyl group having 6 to 40 carbon atoms (fully substituted), and a mixture of those substituted compounds. Examples of such modified bodies of sorbitan (α21) include polysorbate such as polysorbate tristearate and polysorbate monostearate. Examples of modified bodies of sorbitan (α21) in which m+n is more than 0 and R^{α2} has at least one unsaturated bond include, but are not limited to, polysorbate trioleate (in which R^{α2} is C₇H₁₄CH=CHC₈H₁₇) which is sold under the name polysorbate 80. The modified body of sorbitan (α21) may include a mixture of compounds having various active hydrogen substituting groups, and may also include a mixture of a compound in which R^{α2} has at least one unsaturated bond and a compound in which R^{α2} is fully saturated.

### ((α22) Modified body of citric acid)

The modified body of sugar alcohol/ hydroxy acid (α2) may be a modified body of citric acid (α22), which is citric acid modified with a hydrocarbon group having 6 or more and 40 or less carbon atoms, and in particular, may be alkyl citrate. For example, the modified body of citric acid (α22) may exist in the form of a monosubstituted, disubstituted or trisubstituted body having an alkyl group. A mixture of citrates which have a different number of active hydrogen substituting groups may be used, and a mixture of a compound comprising a hydrocarbon group in which R^{α2} has at least one unsaturated bond and a compound in which R^{α2} is a fully saturated hydrocarbon may also be included. The modified body of citric acid (α22) may have an active hydrogen substituting group selected from - (CH₂CH₂O)ₙ(CH(CH₃)CH₂O)ₘR^{α2} and - (CH₂CH₂O)ₙ(CH(CH₃)CH₂O)ₘC(O)R^{α2} (in which R^{α2} is a hydrocarbon group having 6 or more and 40 or less carbon atoms). Examples of modified bodies of citric acid (α22) include, but are not limited to, trialkyl citrate.

### ((α23) Modified body of pentaerythritol)

The modified body of sugar alcohol/ hydroxy acid (α21) may be a modified body of pentaerythritol (α23), which is pentaerythritol modified with a hydrocarbon group having 6 or more and 40 or less carbon atoms, and may be a monosubstituted, disubstituted or trisubstituted pentaerythritol comprising a hydrocarbon group having 6 or more and 40 or less carbon atoms (in particular, an alkyl group), and for example, is dipentaerythritol ester. The active hydrogen substituting group may include -CH₂C[CH₂OR^{α2}]₃ (wherein R^{α2} is a hydrocarbon group having 6 or more and 40 or less carbon atoms). Furthermore, the modified body of pentaerythritol (α23) may include a mixture of compounds having hydrocarbon groups with a different chain length, or a mixture of a compound in which R^{α2} has at least one unsaturated bond and a compound in which R^{α2} is fully saturated.

### [(α3) Cationic Active Hydrogen Compound]

The active hydrogen compound may be a cationic active hydrogen compound (α3) having an active hydrogen group and a cationic group.

Furthermore, the cationic active hydrogen compound (α3) preferably has two or more hydroxy groups per molecule.

Examples of cationic groups include a tertiary amino group.

In other words, the cationic active hydrogen compound (α3) preferably has two or more hydroxy groups per molecule as an active hydrogen group and a tertiary amino group as a cationic group in combination.

This cationic active hydrogen compound can impart good dispersibility to liquid medium (for example, water) and can introduce a cationic group compatible with textile products (described later) into resin and thus can improve wash durability.

More preferably, the cationic active hydrogen compound has two hydroxy groups per molecule as an active hydrogen group and a tertiary amino group as a cationic group in combination.

Examples of cationic active hydrogen compounds include alkyl dialkanolamine such as N-methyl diethanolamine, N-ethyl diethanolamine, N-propyl diethanolamine, N-butyl diethanolamine, N-methyl dipropanolamine and propanolamine and trialkanolamine such as N-triethanolamine and N-triisopropanolamine, and preferably N-methyl diethanolamine.

The cationic active hydrogen compound (or a portion of the water-repellent compound, which is derived from a cationic active hydrogen compound) may form a salt with an acid compound.

Examples of acid compounds include organic acid and inorganic acid. Examples of organic acids include acetic acid, lactic acid, tartaric acid and malic acid, and acetic acid and lactic acid are preferred, and acetic acid is more preferred. Examples of inorganic acids include hydrochloric acid, sulfuric acid and phosphoric acid, and hydrochloric acid is preferred. The acid compound is preferably an organic acid. When the acid compound includes an organic acid, acid is evaporated by heat treatment, and water-repellency of the object to be treated with the water-repellent composition may be improved. Furthermore, evaporation of acid by heat treatment facilitates adsorption of cationic groups to textile products, and thus wash durability of the textile product may be improved.

### [(α4) Other active hydrogen-containing compounds]

The active hydrogen compound may include other active hydrogen-containing compounds (α4).

### ((α41) Compound)

The active hydrogen compound (α4) may be a compound (α41) represented by the formula:

R^{α41}-X^{α41}

wherein R^{α41} is a C₁ to C₃₀ linear or branched alkyl optionally having at least one unsaturated group, a hydroxy functional C₁ to C₃₀ linear or branched alkyl, hydroxy functional linear or branched C₁ to C₃₀ polyether, hydroxy functional linear or branched polyester, hydroxy functional linear or branched organosiloxane, thiol functional C₁ to C₃₀ linear or branched alkyl, amine functional C₁ to C₃₀ linear or branched alkyl, Y-R^{α411}R^{α412}R^{α413}N⁺-R^{α414}- wherein Y is a halide ion such as Cl⁻, HOS(=O)₂-R^{α414}-, or R^{α411}R^{α412}C=N- wherein R^{α411}, R^{α412}, R^{α413} are each independently -H or C₁ to C₆ alkyl and R^{α414} is a divalent alkyl group having 1 to 20 carbon atoms,
X^{α41} is a isocyanate reactive functional group such as -OH, -C(O)OH, -SH, -NH(R'), -O-(CH₂CH₂O)ₛ(CH(CH₃)CH₂O)ₜ-H or -C(O)-O-(CH₂CH₂O)ₛ(CH(CH₃)CH₂O)ₜ-H wherein R' is -H or a monovalent organic group, s is an integer of 0 to 50, t represents an integer of 0 to 50 and s+t is more than 0.

The compound (α41) may be a hydrophilic water-soluble material including at least one hydroxy terminated polyether. In the formula, X^{α41} is -O-(CH₂CH₂O)ₛ(CH(CH₃)CH₂O)ₜ-H or -C(O)-O-(CH₂CH₂O)ₛ(CH(CH₃)CH₂O)ₜ-H. -(CH₂CH₂O)- represents an oxyethylene group (EO) and -(CH(CH₃)CH₂O)- represents an oxypropylene group (PO). These polyethers may include only the EO group, only the PO group or a mixture thereof. Furthermore, these polyethers may be in the form of a specified PEG-PPG-PEG (polyethylene glycol-polypropylene glycol-polyethylene glycol) triblock copolymer.

In an embodiment, x^{α41} is -OH, -C(O)OH, -SH or - NH(R'), and R^{α41} is selected from a C₁ to C₃₀ linear or branched alkyl optionally having at least one unsaturated group, a hydroxy functional C₁ to C₃₀ linear or branched alkyl, a hydroxy functional linear or branched C₁ to C₃₀ polyether, a hydroxy functional linear or branched polyester, hydroxy or amine functional linear or branched organosiloxane, thiol functional C₁ to C₃₀ linear or branched alkyl, and an amine functional C₁ to C₃₀ linear or branched alkyl.

X^{α41} may be -OH, and examples of such compounds (α41) include, but are not limited to, an alkyl alcohol such as propanol and butanol, an aliphatic alcohol including stearyl alcohol (in which R^{α41} is a C₁ to C₃₀ linear or branched alkyl optionally having at least one unsaturated group), alkyldiol or polyol such as ethanediol, propanediol, butanediol and hexanediol (in which R^{α41} is a hydroxy functional C₁ to C₃₀ linear or branched alkyl), alkylene glycol ether such as triethylene glycol, tetraethylene glycol, poly(ethylene glycol) (PEG), poly(propylene glycol) (PPG) and poly(tetrahydrofuran), glycol ether containing a mixture of PEG, PPG or THF units (in which R^{α41} is hydroxy functional linear or branched C₁ to C₃₀ polyether), polyester polyol (in which R^{α41} is hydroxy functional linear or branched polyester), silicone prepolymer polyol (in which R^{α41} is hydroxy functional linear or branched organosiloxane), N,N-dimethylaminoethanol (in which R^{α41} is amine functional C₁ to C₃₀ linear or branched alkyl), choline chloride or betaine HCl (in which R^{α41} is Y-R^{α411}R^{α412}R^{α413}N⁺-R^{α414}-) and butanone oxime (in which R^{α41} is R^{α411}R^{α412}C=N-). Polyether polyol may include only the EO group, only the PO group, only the THF group, or a mixture thereof. These polyethers may be in the form of a block copolymer which is specified with PEG-PPG-PEG (polyethylene glycol-polypropylene glycol-polyethylene glycol). Polyether glycol has an average molecular weight of preferably about 200 or more, and most preferably 350 to 2,000.

X^{α41} may be -C(O)OH, and examples of such compounds (α41) include, but are not limited to, fatty acid such as caprylic acid, capric acid, lauric acid, myristic acid, palmitic acid, stearic acid, arachidic acid, behenic acid, lignoceric acid, palmitoleic acid, linoleic acid, arachidonic acid, oleic acid and erucic aid (in which R^{α41} is a C₁ to C₃₀ linear or branched alkyl optionally having at least one unsaturated group), hydroxy-containing acid such as hydroxycaprylic acid, hydroxycapric acid, hydroxylauric acid, hydroxymyristic acid, hydroxypalmitic acid, hydroxystearic acid, hydroxyarachidic acid, hydroxybehenic acid, hydroxylignoceric acid, hydroxypalmitoleic acid, hydroxylinoleic acid, hydroxyarachidonic acid, hydroxyoleic acid and hydroxyerucic acid (in which R^{α41} is hydroxy functional C₁ to C₃₀ linear or branched alkyl), and mercaptoalkanoic acid such as mercaptopropionic acid (in which R^{α41} is thiol functional C₁ to C₃₀ linear or branched alkyl).

X^{α41} may be -SH, and examples of such compounds (α41) include, but are not limited to, alkylthiol such as lauryl mercaptan and dodecyl mercaptan (in which R^{α41} is a C₁ to C₃₀ linear or branched alkyl optionally having at least one unsaturated group).

X^{α41} may be -NH(R'), and examples of such compounds (α41) include, but are not limited to, alkylamine such as diisopropylamine, propylamine, hexylamine and laurylamine (in which R^{α41} is a C₁ to C₃₀ linear or branched alkyl optionally having at least one unsaturated group), alkanolamine such as ethanolamine and propanolamine (in which R^{α41} is a hydroxy functional C₁ to C₃₀ linear or branched alkyl), silicone prepolymer polyamine (in which R^{α41} is amine functional linear or branched organosiloxane), alkyldiamine (in which R^{α41} is an amine functional C₁ to C₃₀ linear or branched alkyl), and aminoalkanesulfonic acid such as 2-aminoethanesulfonic acid (in which R^{α41} is HO-S(O)₂R^{α414}-).

### ((α42) Compound)

The compound (α42) may be a compound represented by the formula:

R^{α421}-(OCH₂CH(OR^{α422})CH₂)_{z}-OR^{α423}

[wherein
at least one of R^{α421}, R^{α422} and R^{α423} is -H, and R^{α421}, R^{α422} and R^{α423} are each independently -H, -R^{α424} or - C(O)R^{α424}, R^{α424} is independently a linear or branched alkyl group having 5 to 29 carbon atoms and optionally having at least one unsaturated bond, and z is 1 to 15.]

The compound (α42) may be a compound commonly referred to as polyglycerol. Other specific examples include, but are not limited to, triglycerol monostearate, triglycerol distearate, hexaglycerol monostearate, hexaglycerol distearate, decaglycerol mono(caprylate/caprate), decaglycerol di(caprylate/caprate), decaglycerol, polyglycerol-3 and C18 diglyceride.

### ((α43) Chain extender)

The compound (α4) may be a chain extender (α43). The chain extender (α43) has two or more (for example, two) functional groups having active hydrogen in the molecule. The chain extender may be a known chain extender, and examples thereof include an aliphatic or aromatic diol or polyol such as ethylene glycol, diethylene glycol, triethylene glycol, propylene glycol, dipropylene glycol, tripropylene glycol, 1,4-butanediol, 1,6-hexanediol and cyclohexanedimethanol; an aliphatic or aromatic diamine or polyamine such as ethylenediamine, piperazine, aminoethylpiperazine, phenylenediamine and diethyltoluenediamine; a phenol hydroxyl group-containing compound such as resorcinol, catechol, hydroquinone, bisphenol, bisphenol A, bisphenol AP (1,1-bis(4-hydroxylphenyl)-1-phenylethane), bisphenol F, bisphenol K, bisphenol M, tetramethylbiphenol and o,o'-diallylbisphenol A; and alcohol amine such as aminoethylethanolamine, aminopropylethanolamine, aminohexylethanolamine, aminoethylpropanolamine, aminopropylpropanolamine and aminohexylpropanolamine.

### {Raw Material Isocyanate}

The water-repellent compound comprises a moiety derived from a raw material isocyanate.

Examples of raw material isocyanates include a compound selected from: an aromatic polyisocyanate selected from tolylene diisocyanate (2,4- or 2,6-tolylene diisocyanate or a mixture thereof) (TDI), phenylene diisocyanate (m-, p-phenylene diisocyanate or a mixture thereof, 4,4'-diphenyl diisocyanate, diphenylmethane diisocyanate (4,4'-, 2,4' or 2,2'-diphenylmethane diisocyanate or a mixture thereof) (MDI), 4,4'-toluidine isocyanate (TODI), 4,4'-diphenyl ether diisocyanate, xylylene diisocyanate (1,3- or 1,4-xylylene diisocyanate or a mixture thereof) (XDI), tetramethyl xylylene diisocyanate (1,3- or 1,4-tetramethylxylylene diisocyanate or a mixture thereof) (TMXDI), ω,ω'-diisocyanate-1,4-diethylbenzene, naphthalene diisocyanate (1,5-, 1,4- or 1,8-naphthalene diisocyanate or a mixture thereof) (NDI), triphenylmethane triisocyanate, tris(isocyanate phenyl)thiophosphate, polymethylene polyphenylene polyisocyanate, nitrodiphenyl-4,4'-diisocyanate, 3,3'-dimethyldiphenylmethane-4,4'-diisocyanate, 4,4'-diphenylpropane diisocyanate and 3,3'-dimethoxydiphenyl-4,4'-diisocyanate;
an acyclic aliphatic polyisocyanate selected from trimethylene diisocyanate, 1,2-propylene diisocyanate, butylene diisocyanate (tetramethylene diisocyanate, 1,2-butylene diisocyanate, 2,3-butylene diisocyanate, 1,3-butylene diisocyanate), hexamethylene diisocyanate, pentamethylene diisocyanate, 2,2,4-trimethylhexamethylene diisocyanate, 2,4,4-trimethylhexamethylene diisocyanate, 2,6-diisocyanatomethylcaproate, lysine diisocyanate, lysine ester triisocyanate, 1,6,11-undecane triisocyanate, 1,3,6-hexamethylene triisocyanate, trimethyl hexamethylene diisocyanate and decamethylene diisocyanate;
an alicyclic polyisocyanate selected from 1,3-cyclopentane diisocyanate, 1,3-cyclopentene diisocyanate, cyclohexane diisocyanate (1,4-cyclohexane diisocyanate, 1,3-cyclohexane diisocyanate), 3-isocyanatomethyl-3,5,5-trimethylcyclohexyl isocyanate (isophorone diisocyanate, IPDI), methylene bis(cyclohexyl isocyanate (4,4'-, 2,4'- or 2,2'-methylene bis(cyclohexyl isocyanate or a mixture thereof) (hydrogenated MDI), methyl cyclohexane diisocyanate (methyl-2,4-cyclohexane diisocyanate, methyl-2,6-cyclohexane diisocyanate, bis(isocyanatomethyl)cyclohexane (1,3- or 1,4-bis(isocyanatomethyl)cyclohexane or a mixture thereof) (hydrogenated XDI), dimer acid diisocyanate, transcyclohexane 1,4-diisocyanate, hydrogenated tolylene diisocyanate (hydrogenated TDI) and hydrogenated tetramethylxylylene diisocyanate (hydrogenated TMXDI);
a bridged alicyclic polyisocyanate selected from norbornene diisocyanate, norbornane diisocyanatomethyl, bicycloheptane triisocyanate, diisocyanatomethyl bicycloheptane and di(diisocyanatomethyl)tricyclodecane;
a compound selected from: 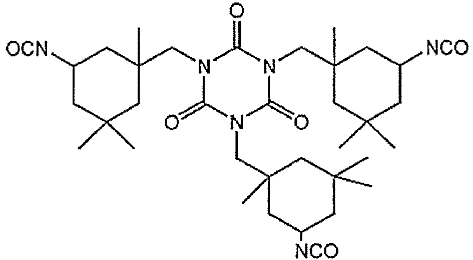 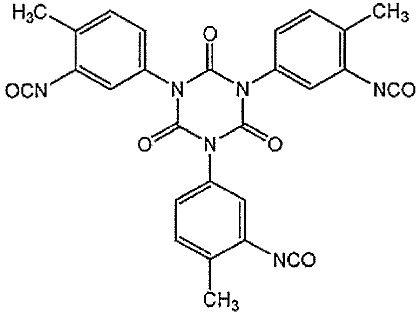 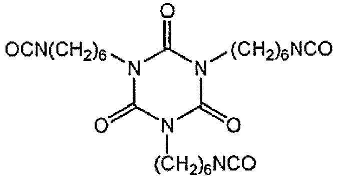 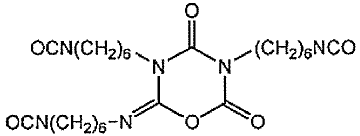 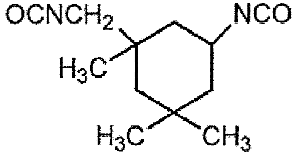 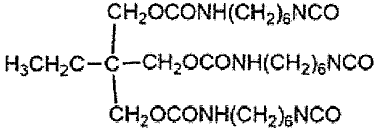 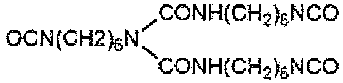 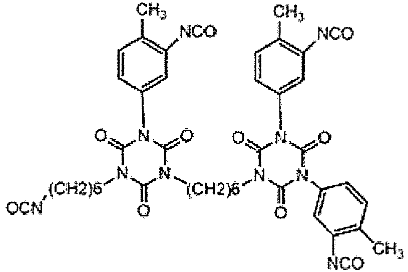 and
   a biuret modified product of the above isocyanate, a multimer (such as dimer, trimer (e.g., isocyanurate derivative, an iminooxadiazindione derivative), pentamer, heptamer) of polyisocyanate, an allophanate derivative (e.g., an allophanate derivative formed by the reaction between the above polyisocyanate and a monovalent alcohol or divalent alcohol), a polyol derivative (e.g., a polyol derivative formed by the reaction between the above polyisocyanate and trivalent alcohol (e.g., trimethylolpropane) (alcohol adduct, preferably trimethylolpropane adduct and the like)), a biuret derivative (e.g., a biuret derivative formed by the reaction between the above polyisocyanate and water or amine), a urea derivative (e.g., a urea derivative formed by the reaction between the above polyisocyanate and diamine), an oxadiazinetrione derivative (e.g., oxadiazinetrione formed by the reaction between the above polyisocyanate and carbon dioxide gas), a carbodiimide derivative (e.g., a carbodiimide derivative formed by decarboxylation condensation reaction of the above polyisocyanate), a uretdione derivative and a uretonimine derivative.

The raw material isocyanate has an average number of isocyanate groups of 2 or more, preferably 2.5, and more preferably 2.9, and for example 3.8 or less. The raw material isocyanate may be polyisocyanate having a plurality of isocyanate groups.

### {Method for Synthesizing Isocyanate Derivative}

To obtain the isocyanate derivative, the active hydrogen compound and the raw material isocyanate are reacted. The reaction may be performed in a single step or sequentially in multiple steps. For example, when unreacted active hydrogen groups or active hydrogen reactive groups are present in the product, synthesis may be sequentially performed. Sequential reaction is useful when substituted sugar alcohol having a large number of OH groups is used. The reaction conditions such as the concentration in the reaction and reaction temperature are not limited, and may be determined by those skilled in the art. More specifically, the active hydrogen compound and the raw material isocyanate may be mixed so that the equivalent ratio of the active hydrogen reactive group (an isocyanate group) to the active hydrogen group (active hydrogen reactive group/ active hydrogen group) is for example, 1.2 or more, preferably 1.5 or more, and for example, 2.0 or less.

### {Composition of Water-repellent Compound}

The amount of the moiety derived from the active hydrogen compound may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the isocyanate derivative.

The amount of the moiety derived from the hydrocarbon alcohol (α1) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the active hydrogen compound.

The amount of the moiety derived from the modified body of sugar alcohol/ hydroxy acid (α2) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the active hydrogen compound.

The amount of the moiety derived from the cationic active hydrogen compound (α3) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the active hydrogen compound.

The amount of the moiety derived from another active hydrogen compound (α4) may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the moiety derived from the active hydrogen compound.

The amount of the moiety derived from the raw material isocyanate may be 10% by weight or more, 20% by weight or more, 30% by weight or more, 40% by weight or more, 50% by weight or more, 60% by weight or more, or 70% by weight or more, and 75% by weight or less, 65% by weight or less, 55% by weight or less, 45% by weight or less, 35% by weight or less, 25% by weight or less, or 15% by weight or less relative to the isocyanate derivative.

### <Water-repellent agent>

The water-repellent agent of the present disclosure imparts water repellency to a substrate (e.g., fiber substrate). The water-repellent agent of the present disclosure can impart good water repellency and/or soaking resistance to substrates, and for example, can impart both good water repellency and soaking resistance to substrates.

The water-repellent agent of the present disclosure includes the above water-repellent compound. An example of the water-repellent agent is:
a water-repellent agent comprising a water-repellent compound having a hydrocarbon group having 10 or more and 40 or less carbon atoms, wherein
the water-repellent compound comprises an acrylic polymer and an isocyanate derivative,
the isocyanate derivative has a water contact angle of 100° or more and comprises a moiety derived from a cationic active hydrogen compound, and
the weight ratio between the acrylic polymer and the isocyanate derivative is 50/50 to 80/20.

The water-repellent compound itself may be used as a water-repellent agent, or may be used as a water-repellent agent in combination with other components described below.

The water-repellent agent of the present disclosure may not have any one selected from the group consisting of a compound having a fluoroalkyl group having 8 or more carbon atoms, a compound having a perfluoroalkyl group having 8 or more carbon atoms, a compound having a fluoroalkyl group having 4 or more carbon atoms, a compound having a perfluoroalkyl group having 4 or more carbon atoms, a compound having a perfluoroalkyl group, a compound having a fluoroalkyl group, and a compound having a fluorine atom. The repellent according to the present disclosure can impart water repellency to a substrate without including these fluorine compounds.

### {Dispersant}

The water-repellent agent of present disclosure may comprise a dispersant.

The dispersant may be at least one selected from an organic dispersant and an inorganic dispersant. The dispersant may be non-anionic, and may be at least one selected from a nonionic dispersant, a cationic dispersant, an amphoteric dispersant and an inorganic dispersant.

An organic dispersant and an inorganic dispersant may be used as the dispersant, respectively, or an organic dispersant and an inorganic dispersant may be used in combination.

An organic dispersant may be used as the dispersant. The organic dispersant may be classified into a nonionic dispersant, an anionic dispersant, a cationic dispersant and an amphoteric dispersant. The organic dispersant may mean a surfactant.

The dispersant may have no fluorine.

### [Nonionic Dispersant]

The dispersant may comprise a nonionic dispersant. The nonionic dispersant may be a nonionic surfactant.

The nonionic dispersant may be of low molecular weight or high molecular weight. The nonionic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 2,500 or less, 750 or less, or 250 or less.

Examples of nonionic dispersant include ether, ester, ester ether, alkanolamide, polyol and amine oxide.

The ether is, for example, a compound having an oxyalkylene group (preferably a polyoxyethylene group).

The ester is, for example, an ester of an alcohol and a fatty acid. The alcohol is, for example, an alcohol which is monohydric to hexahydric (particularly dihydric to pentahydric) and has 1 to 50 carbon atoms (particularly 10 to 30 carbon atoms) (for example, an aliphatic alcohol). Examples of the fatty acids are saturated or unsaturated fatty acids having 2 to 50 carbon atoms, particularly 5 to 30 carbon atoms.

The ester ether is, for example, a compound in which an alkylene oxide (particularly ethylene oxide) is added to an ester of an alcohol and a fatty acid. The alcohol is, for example, an alcohol which is monohydric to hexahydric (particularly dihydric to pentahydric) and has 1 to 50 carbon atoms (particularly 3 to 30 carbon atoms) (for example, an aliphatic alcohol). Examples of the fatty acids are saturated or unsaturated fatty acids having 2 to 50 carbon atoms, particularly 5 to 30 carbon atoms.

The alkanolamide is formed of for example, a fatty acid and an alkanolamine. The alkanolamide may be a monoalkanolamide or a dialkanolamide. Examples of the fatty acids are saturated or unsaturated fatty acids having 2 to 50 carbon atoms, particularly 5 to 30 carbon atoms. The alkanolamine may be an alkanol with 1 to 3 amino groups and 1 to 5 hydroxyl groups, having 2 to 50, particularly 5 to 30 carbon atoms.

The polyol may be, for example, a dihydric to pentahydric alcohol having 10 to 30 carbon atoms.

The amine oxide may be an oxide (for example, having 5 to 50 carbon atoms) of an amine (secondary amine or preferably tertiary amine).

The nonionic dispersant is preferably a nonionic dispersant having an oxyalkylene group (preferably a polyoxyethylene group). The alkylene group in the oxyalkylene group preferably has 2 to 10 carbon atoms. The number of oxyalkylene groups in the molecule of the nonionic dispersant is generally preferably 2 to 100.

The nonionic dispersant is selected from the group consisting of an ether, an ester, an ester ether, an alkanolamide, a polyol, or an amine oxide, and is preferably a nonionic dispersant having an oxyalkylene group.

The nonionic dispersant may be, for example, an alkylene oxide adduct of a linear and/or branched aliphatic (saturated and/or unsaturated) group, a polyalkylene glycol ester of a linear and/or branched fatty acid (saturated and/or unsaturated), a sorbitan ester of a linear and/or branched fatty acid (saturated and/or unsaturated), a glycerin ester of a linear and/or branched fatty acid (saturated and/or unsaturated), a polyglycerol ester of a linear and/or branched fatty acid (saturated and/or unsaturated), a sucrose ester of a linear and/or branched fatty acid (saturated and/or unsaturated), a polyoxyethylene (POE)/polyoxypropylene (POP) copolymer (random copolymer or block copolymer), and an alkylene oxide adduct of acetylene glycol. Among them, the nonionic dispersant is preferably a dispersant such that the structures of the alkylene oxide addition moiety and polyalkylene glycol moiety are polyoxyethylene (POE) or polyoxypropylene (POP) or POE/POP copolymer (which may be a random or block copolymer, for example.).

Furthermore, the nonionic dispersant may not include an aromatic group.

The nonionic dispersant may be the compound represented by the formula:

R¹O-(CH₂CH₂O)ₚ-(R²O)_{q}-R³

[wherein R¹ is an alkyl group having 1 to 22 carbon atoms, an alkenyl group or an acyl group, having 2 to 22 carbon atoms,
R² is each independently the same or different and is an alkylene group having 3 or more carbon atoms (for example, 3 to 10),
R³ is a hydrogen atom, an alkyl group having 1 to 22 carbon atoms, or an alkenyl group having 2 to 22 carbon atoms,
p is a numeral of 2 or more,
q is 0 or a numeral of 1 or more.].

R¹ preferably has 8 to 20 carbon atoms, particularly 10 to 18 carbon atoms. Preferred specific examples of R¹ include a lauryl group, a tridecyl group, and an oleyl group.

R² is, for example, a propylene group and a butylene group.

In the nonionic dispersant, for example, p may be a numeral of 3 or more (for example, 5 to 200) and q may be a numeral of 2 or more (for example, 5 to 200). Namely, -(R²O)_{q}- may form, for example, a polyoxyalkylene chain.

The nonionic dispersant may be, for example, a polyoxyethylene alkylene alkyl ether comprising a hydrophilic polyoxyethylene chain and a hydrophobic oxyalkylene chain (particularly a polyoxyalkylene chain) in the center. The hydrophobic oxyalkylene chain includes, for example, an oxypropylene chain, an oxybutylene chain, and a styrene chain. The oxypropylene chain is preferred among them.

Specific examples of the nonionic dispersant include a condensation product of ethylene oxide with hexylphenol, isooctatylphenol, hexadecanol, oleic acid, an alkane (C₁₂-C₁₆) thiol, a sorbitan monofatty acid (C₇-C₁₉), an alkyl (C₁₂-C₁₈) amine, or the like, and a sorbitan fatty acid ester, a glycerin fatty acid ester, a polyglycerin fatty acid ester, a sucrose fatty acid ester, a propylene glycol fatty acid ester, a polyoxyethylene alkyl ether, a polyoxyethylene polyoxypropylene alkyl ether, a polyoxyethylene glycerin fatty acid ester, a polyoxyethylene sorbitan fatty acid ester, and a lecithin derivative.

The proportion of the polyoxyethylene block can be 5 to 80% by weight, for example, 30 to 75% by weight, particularly 40 to 70% by weight, based on a molecular weight of the nonionic dispersant (copolymer).

The average molecular weight of the nonionic dispersant is generally 300 to 5,000, for example, 500 to 3,000.

For example, the nonionic dispersant may be used singly or in admixture of two or more. The nonionic dispersant may be a mixture of a compound with an HLB (hydrophilic-hydrophobic balance) of less than 15 (particularly 5 or less) and a compound with an HLB of 15 or more.

### [Cationic Dispersant]

The dispersant may comprise a cationic dispersant. The cationic dispersant may be a cationic surfactant. The cationic dispersant may be of low molecular weight (with a molecular weight of 2,000 or less, in particular, 10,000 or less) or of high molecular weight (with a molecular weight of, for example, 2,000 or more). The cationic dispersant may not have an amide group.

The cationic dispersant may be of low molecular weight or high molecular weight. The cationic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 2,500 or less, 750 or less, or 250 or less.

The cationic dispersant may be an amine salt, quaternary ammonium salt, or oxyethylene-added ammonium salt. Specific examples of the cationic surfactant include, but are not limited to, amine salt type dispersants such as an alkylamine salt, amino alcohol fatty acid derivative, polyamine fatty acid derivative, and imidazoline; quaternary ammonium salt type dispersants such as an alkyltrimethylammonium salt, dialkyldimethylammonium salt, alkyldimethylbenzylammonium salt, pyridinium salt, alkylisoquinolinium salt, benzalkonium chloride and benzethonium chloride.

Preferred examples of the cationic dispersant are the compound represented by the formula:

R21-N⁺(-R²²)(-R²³)(-R²⁴)X⁻

[wherein R²¹, R²², R²³, R²⁴ are each a hydrocarbon group having 1 to 40 carbon atoms, and
X is an anionic group.].

Specific examples of R²¹, R²², R²³, -R²⁴ are alkyl groups (for example, a methyl group, a butyl group, a stearyl group, and a palmityl group). Specific examples of X are halogen (for example, chlorine) and acids (hydrochloric acid and acetic acid).

The cationic dispersant is particularly preferably a monoalkyltrimethylammonium salt (with an alkyl having 4 to 40 carbon atoms).

The cationic dispersant is preferably an ammonium salt. The cationic dispersant may be, for example, an ammonium salt represented by the formula:

R¹ₚ-N⁺R²_{q}X⁻

[wherein R¹ is a C12 or more (for example C₁₂ to C₅₀) linear and/or branched aliphatic (saturated and/or unsaturated) group,
R² is H or a C1 to C4 alkyl group, a benzyl group, a polyoxyethylene group (the number of oxyethylene group is, for example, 1 (particularly 2, especially 3) to 50),
and is particularly preferably CH₃ and C₂H₅,
X is a halogen atom (for example) and a C₁ to C₄ fatty acid base,
p is 1 or 2, q is 2 or 3, and p + q=4.].
The number of carbon atoms of R¹ may be 12 to 50, for example, 12 to 30.

Specific examples of the cationic dispersants include dodecyltrimethylammonium acetate, trimethyltetradecylammonium chloride, hexadecyltrimethylammonium bromide, trimethyloctadecylammonium chloride, (dodecylmethylbenzyl)trimethylammonium chloride, benzyldodecyldimethylammonium chloride, methyldodecyl di(hydropolyoxyethylene) ammonium chloride, benzyldodecyl di(hydropolyoxyethylene) ammonium chloride, and N-[2-(diethylamino)ethyl]oleamide hydrochloride.

### [Anionic Dispersant]

The dispersant may comprise an anionic dispersant. The anionic dispersant may be an anionic surfactant. The dispersant may not include an anionic dispersant.

The anionic dispersant may be of low molecular weight or high molecular weight. The anionic dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 2,500 or less, 750 or less, or 250 or less.

Examples of the anionic dispersant include an alkyl ether sulfate, an alkyl sulfate, an alkenyl ether sulfate, an alkenyl sulfate, an olefin sulfonate, an alkanesulfonate, a saturated or unsaturated fatty acid salt, an alkyl or alkenyl ether carbonate, an α-sulfone fatty acid salt, a N-acylamino acid dispersant, a phosphate mono- or diester dispersant, and a sulfosuccinic acid ester.

### [Amphoteric Dispersant]

The dispersant may comprise an amphoteric dispersant. The amphoteric dispersant may be an amphoteric surfactant.

The amphoteric dispersant may be of low molecular weight or high molecular weight. The amphoteric dispersant may have a molecular weight of 100 or more, 500 or more, 1,000 or more, 2,000 or more, 4,000 or more, or 6,000 or more, and 100,000 or less, 10,000 or less, 7,500 or less, 5,000 or less, 2,500 or less, 750 or less, or 250 or less.

Examples of the amphoteric dispersants include, for example, alanines, imidazolinium betaines, amidobetaines, and acetic acid betaine, and specific examples of the amphoteric dispersants include, for example, lauryl betaine, stearyl betaine, lauryl carboxymethyl hydroxyethyl imidazolinium betaine, lauryl dimethylamino acetic acid betaine, and fatty acid amidopropyldimethylaminoacetic acid betaine.

### [Inorganic Dispersant]

The dispersant may comprise an inorganic dispersant.

The inorganic dispersant has an average primary particle size of 5 nm or larger, 30 nm or larger, 100 nm or larger, 1 µm or larger, 10 µm or larger, or 25 µm or larger, and 100 µm or smaller, 50 µm or smaller, 10 µm or smaller, 1 µm or smaller, 500 nm or smaller, or 300 nm or smaller. The average primary particle size may be measured by a microscope, for example, a scanning electron microscope or a transmission electron microscope. The inorganic dispersant may be hydrophilic particles.

Examples of inorganic dispersants include polyvalent metal phosphate such as tricalcium phosphate, magnesium phosphate, aluminum phosphate, zinc phosphate and hydroxyapatite; carbonate such as calcium carbonate and magnesium carbonate; silicate such as calcium metasilicate; sulfate such as calcium sulfate and barium sulfate; and hydroxide such as calcium hydroxide, magnesium hydroxide and aluminum hydroxide.

### [Reactive Emulsifier]

The dispersant may comprise a reactive emulsifier. When the water-repellent compound is prepared (for example, an acrylic polymer is synthesized) in the presence of a reactive emulsifier, the water-repellent compound may form a polymer including a structural unit derived from the reactive emulsifier.

When the water-repellent compound is a polymer including a structural unit derived from the reactive emulsifier, product stability of the aqueous dispersion (water repellent composition) may be improved without reducing water repellency.

The reactive emulsifier is a radical reactive emulsifying dispersant, that is, an emulsifier having one or more polymerizable unsaturated group, and is copolymerizable with the monomer components described above.

Examples of reactive emulsifiers include the reactive emulsifiers disclosed in JPA 2017-25440. Use of the reactive emulsifier may improve production stability of the aqueous dispersion (water repellent composition) without reducing water repellency.

### [Amount of Dispersant]

The amount of dispersant may be 0.01 parts by weight or more, 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 30 parts by weight or less, 20 parts by weight or less, 10 parts by weight or less, 5 parts by weight or less, 3 parts by weight or less, or 1 part by weight or less, relative to 100 parts by weight of the water-repellent compound.

### {Liquid Medium}

The water-repellent agent in the present disclosure may comprise a liquid medium. The liquid medium may be water, an organic solvent, or a mixture of water and an organic solvent. The water-repellent agent may be a dispersion or a solution. The water-repellent agent in the present disclosure may be in the form of a water dispersion, and may include at least water.

Examples of the organic solvents include esters (for example, esters having 2 to 40 carbon atoms, specifically ethyl acetate and butyl acetate), ketones (for example, ketones having 2 to 40 carbon atoms, specifically methyl ethyl ketone and diisobutyl ketone), alcohols (for example, alcohols having 1 to 40 carbon atoms, specifically isopropyl alcohol), aromatic solvents (for example, toluene and xylene), petroleum-based solvents (for example, alkanes having 5 to 10 carbon atoms, specifically, naphtha and kerosene). The organic solvent is preferably a water-soluble organic solvent. The water-soluble organic solvent may include a compound having at least one hydroxy group (for example, polyol such as alcohol and glycol solvent, and an ether form of polyol (for example, a monoether form)). These may be used alone, or two or more of them may be used in combination.

### [Amount of Liquid Medium]

The amount of liquid medium may be 1 part by weight or more, 3 parts by weight or more, 5 parts by weight or more, 10 parts by weight or more, 20 parts by weight or more, 30 parts by weight or more, 40 parts by weight or more, or 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the water-repellent compound.

The amount of water may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the water-repellent compound.

The amount of the organic solvent may be 1 part by weight or more, 3 parts by weight or more, 5 parts by weight or more, 10 parts by weight or more, 20 parts by weight or more, 30 parts by weight or more, 40 parts by weight or more, 50 parts by weight or more, 100 parts by weight or more, 200 parts by weight or more, 300 parts by weight or more, 500 parts by weight or more, or 1,000 parts by weight or more, and 3,000 parts by weight or less, 2,000 parts by weight or less, 1,000 parts by weight or less, 500 parts by weight or less, 200 parts by weight or less, 175 parts by weight or less, 150 parts by weight or less, 125 parts by weight or less, 100 parts by weight or less, 80 parts by weight or less, 60 parts by weight or less, 40 parts by weight or less, 20 parts by weight or less, or 10 parts by weight or less relative to 1 part by weight of the water-repellent compound.

### {Silicone}

The water-repellent agent in the present disclosure may include silicone (polyorganosiloxane). Inclusion of silicone may achieve both favorable texture and durability in addition to favorable water repellency. The water-repellent compound may be prepared (for example, monomer is polymerized) in the presence of silicone, or silicone may be added to the water-repellent compound.

As the silicone, a known silicone can be used, and examples of the silicone include a polydimethylsiloxane and modified silicones (for example, amino-modified silicone, epoxy-modified silicone, carboxy-modified silicone, and methylhydrogen silicone). For example, the silicone may be silicone wax having waxy properties. These may be used singly or in combination of two or more thereof.

A weight-average molecular weight of the silicone may be 1,000 or more, 10,000 or more, or 50,000 or more, and may be 500,000 or less, 250,000 or less, 100,000 or less, or 50,000 or less.

### [Amount of Silicone]

The amount of silicone is 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, relative to 100 parts by weight of the water-repellent compound.

### {Wax}

The water--repellent agent in the present disclosure may include wax. Containing the wax can impart favorable water-repellency to a substrate.

Examples of wax include paraffin wax, microcrystalline wax, Fischer-Tropsch wax, polyolefin wax (for example, polyethylene wax and polypropylene wax), oxidized polyolefin wax, silicone wax, animal and vegetable wax and mineral wax. Paraffin wax is preferred. Specific examples of compounds constituting wax include n-alkane (such as tricosan, tetracosane, pentacosane, hexacosane, heptacosan, octacosan, nonacosan, triacontane, hentriacontane, dotriacontane, tritriacontane, tetratriacontane, pentatriacontane, hexatriacontane), n-alkene (such as 1-eicosene, 1-docosene, 1-tricosene, 1-tetracosene, 1-pentacosene, 1-hexacosene, 1-heptacosene, 1-octacosene, nonacosane, triacontane, hentriacontane, dotriacontane, tritriacontane, tetratriacontane, pentatriacontane, hexatriacontane). The number of carbon atom in the compound constituting the wax is preferably 20 to 60, for example 25 to 45. A molecular weight of the wax may be 200 to 2,000, for example, 250 to 1,500 or 300 to 1,000. These may be used singly or in combination of two or more thereof.

The wax may have a melting point of 40°C or higher, 50°C or higher, 55°C or higher, 60°C or higher, 65°C or higher, or 70°C or higher, preferably 55°C or higher, and more preferably 60°C or higher. The melting point of wax is measured according to JIS K 2235-1991.

### [Amount of Wax]

The amount of wax may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, relative to 100 parts by weight of the water-repellent compound.

### {Organic Acid}

The water-repellent agent of the present disclosure may contain an organic acid. As the organic acid, a known organic acid can be used. Examples of the organic acid preferably include, for example, a carboxylic acid, a sulfonic acid, and a sulfinic acid, with the carboxylic acid being particularly preferred. Examples of the carboxylic acid include, for example, formic acid, acetic acid, propionic acid, butyric acid, oxalic acid, succinic acid, glutaric acid, adipic acid, malic acid, and citric acid, with the formic acid or acetic acid being particularly preferred. In the present disclosure, one type of organic acid may be used, or two or more thereof may be combined for use. For example, formic acid and acetic acid may be combined for use.

### [Amount of Organic Acid]

The amount of organic acid may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less, relative to 100 parts by weight of the water-repellent compound. The amount of organic acid may be adjusted so that a pH of the water-repellent agent is 3 to 10, for example 5 to 9, particularly 6 to 8. For example, the water-repellent agent may be acidic (pH of 7 or less, for example 6 or less).

### {Curing Agent}

The water-repellent agent of the present disclosure may contain a curing agent (active hydrogen-reactive compound or active hydrogen-containing compound).

The curing agent (cross-linking agent) in the water-repellent agent can effectively cure the water-repellent compound. The curing agent may be an active hydrogen-reactive compound or an active hydrogen-containing compound, which reacts with an active hydrogen or an active hydrogen-reactive group that the water-repellent compound has. Examples of the active hydrogen-reactive compound include an isocyanate compound, epoxy compound, chloromethyl group-containing compound, carboxyl group-containing compound, and hydrazide compound. Examples of the active hydrogen-containing compound include a hydroxyl group-containing compound, an amino group-containing compound and a carboxyl group-containing compound, a ketone group-containing compound, a hydrazide compound, and a melamine compound.

The curing agent may contain an isocyanate compound. The isocyanate compound may be a polyisocyanate compound. The polyisocyanate compound is a compound having two or more isocyanate groups in one molecule. The polyisocyanate compound serves as a cross-linking agent. Examples of the polyisocyanate compound include, for example, an aliphatic polyisocyanate, an alicyclic polyisocyanate, an aromatic-aliphatic polyisocyanate, an aromatic polyisocyanate, and derivatives of these polyisocyanates. The isocyanate compound may be a blocked isocyanate compound (for example, a blocked polyisocyanate compound). The blocked isocyanate compound is a compound in which an isocyanate group of an isocyanate compound is masked with a blocking agent to inhibit reaction.

Examples of the aliphatic polyisocyanates are aliphatic triisocyanates such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, an aliphatic diisocyanate of 2,6-diisocyanatomethylcaproate, and aliphatic triisocyanates such as lysine ester triisocyanate, 1,4,8-triisocyanateoctane, 1,6,11-triisocyanatoundecane, 1,8-diisocyanato-4-isocyanatomethyloctane, 1,3,6-triisocyanatohexane, 2,5,7-trimethyl-1,8-diisocyanato-5-isocyanatomethyloctane. These may be used singly or in combination of two or more thereof.

Examples of the alicyclic polyisocyanates include, for example, an alicyclic diisocyanate and an alicyclic triisocyanate. Specific examples of the alicyclic polyisocyanate include 1,3-cyclopentene diisocyanate, 3-isocyanatomethyl-3,5,5-trimethylcyclohexyl isocyanate (isophorone diisocyanate), and 1,3,5-triisocyanatocyclohexane. These may be used singly or in combination of two or more thereof.

Examples of the aromatic-aliphatic polyisocyanate include an aromatic-aliphatic diisocyanate and aromatic-aliphatic triisocyanate. Specific examples of the aromatic-aliphatic polyisocyanate include 1,3- or 1,4-xylylene diisocyanate or a mixture thereof, 1,3- or 1,4-bis(1-isocyanato-1-methylethyl)benzene (tetramethyl xylylene diisocyanate) or a mixture thereof, and 1,3,5-triisocyanatomethylbenzene. These may be used singly or in combination of two or more thereof.

Examples of the aromatic polyisocyanates include an aromatic diisocyanate, aromatic triisocyanate, and aromatic tetraisocyanate. Specific examples of the aromatic polyisocyanate include, for example, m-phenylene diisocyanate, p-phenylene diisocyanate, 4,4'-diphenyl diisocyanate, 1,5-naphthalene diisocyanate, 2,4'- or 4,4'-diphenylmethane diisocyanate, or a mixture thereof, 2,4- or 2,6-tolylene diisocyanate or a mixture thereof, triphenylmethane-4,4',4"-triisocyanate, and 4,4'-diphenylmethane-2,2',5,5'-tetraisocyanate. These may be used singly or in combination of two or more thereof.

Examples of the derivative of the polyisocyanate include various derivatives such as a dimer, trimer, biuret, allophanate, carbodiimide, urethodione, urethoimine, isocyanurate, and iminooxadiazinedione of the aforementioned polyisocyanate compounds. These may be used singly or in combination of two or more thereof.

The blocked isocyanate compound is a compound in which the isocyanate group of the isocyanate compound is masked with a blocking agent to inhibit reaction. In this regard, examples of isocyanate compounds include the above polyisocyanate compound such as 4,4'-bisisocyanatophenyl methane, toluene diisocyanate, hexamethylene diisocyanate, a trimer of diisocyanate and a trimethylolpropane adduct. A known blocking agent may be used, and examples thereof include alcohol (e.g., secondary or tertiary alcohol), an active methylene compound, phenol, oxime, substituted pyrazole, an amine compound, a phenol compound and lactam. The blocked isocyanate compound may be obtained by reacting an isocyanate compound and a blocking agent by a known method. After the reaction, the resultant may be emulsified and dispersed using a surfactant by a known method. For example, self dispersibility of the blocked isocyanate compound may be improved by blocking 70 to 95% of all isocyanate groups in the isocyanate compound and then allowing an emulsifier (for example, polyalkylene glycol, in particular, polyethylene glycol) to react with the remaining isocyanate groups. Use of the blocked isocyanate compound may be effective for improving wash durability of the water-repellent agent and improving product stability.

These polyisocyanates can be used singly or in combination of two or more thereof.

As the polyisocyanate compound, a blocked polyisocyanate compound (blocked isocyanate), which is a compound obtained by blocking isocyanate groups of the polyisocyanate compound with a blocking agent, is preferably used. The blocked polyisocyanate compound is preferably used because it is relatively stable even in solution and can be used in the same solution as solution of the water--repellent agent.

The blocking agent is an agent that blocks free isocyanate groups. The blocked polyisocyanate compound, for example, can be heated 100°C or higher, for example, 130°C or higher to regenerate isocyanate groups, facilitating a reaction with hydroxyl groups. Examples of the blocking agent include, for example, a phenolic compound, lactam-based compound, aliphatic alcohol-based compound, and oxime-based compound. The polyisocyanate compound may be used singly or in combination of two or more thereof.

The epoxy compound is a compound having an epoxy group. Examples of the epoxy compound include epoxy compounds having a polyoxyalkylene group, such as a polyglycerol polyglycidyl ether and a polypropylene glycol diglycidyl ether; as well as a sorbitol polyglycidyl ether.

The chloromethyl group-containing compound is a compound having a chloromethyl group. Examples of the chloromethyl group-containing compound include, for example, a chloromethyl polystyrene.

The carboxyl group-containing compound is a compound having a carboxyl group. Examples of the carboxyl group-containing compound include, for example, a (poly)acrylic acid, and a (poly)methacrylic acid.

Specific examples of the ketone group-containing compound include, for example, a (poly)diacetone acrylamide, and diacetone alcohol.

Specific examples of the hydrazide compound include, for example, hydrazine, a carbohydrazide, and adipic acid hydrazide.

Specific examples of the melamine compound include, for example, a melamine resin and a methyl etherified melamine resin.

### [Amount of Curing Agent]

The amount of the curing agent may be 0.1 parts by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more, and may be 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, and 5 parts by weight or less, relative to 100 parts by weight of the water-repellent compound.

### {Other Component}

The water-repellent agent may contain a component other than the aforementioned components. Examples of other components include a binder resin, an anti-slip agent, a sizing agent, a paper strengthening agent, PVA, a penetrant, an organic acid, a pigment, a filler, an antistatic agent, an antiseptic agent, an ultraviolet absorber, an antibacterial agent, a deodorant, a fragrance, polysaccharides, a paper strengthening agent, an agglomerating agent, a yield improver and a coagulant These may be used singly or in combination of two or more thereof. In addition to the above components, other water-repellent and/or oil-repellent agents (e.g., a dendrimer water-repellent agent ECO PLUS manufactured by Rudolf GmbH), a dispersant, a texture modifier, a softening agent, a flame retarder, a coating material fixing agent, a wrinkle-resistant agent, a drying rate adjuster, a cross-linking agent, a film formation agent, a compatibilizer, an antifreezing agent, a viscosity adjuster, an ultraviolet absorber, an antioxidant, a pH adjuster, an insect repellent, an antifoaming agent, an anti-shrinkage agent, a laundry wrinkle-resistant agent, a shape retention agent, a drape retention agent, an ironing improving agent, a brightening agent, a whitening agent, fabric softening clay, a migration-proofing agent such as a polyvinylpyrrolidone, a polymer dispersant, a soil release agent, a scum dispersant, a fluorescent brightening agent such as 4,4-bis(2-sulfostyryl)biphenyldisodium (Tinopal CBS-X manufactured by Ciba Specialty Chemicals PLC), a dye fixing agent, an anti-color fading agent such as 1,4-bis(3-aminopropyl)piperazine, a stain removing agent, enzymes such as cellulase, amylase, protease, lipase, and keratinase as fiber surface modifiers, a foam inhibitor, and silk protein powder that can impart texture and functions of silk such as moisture absorption and release properties, and surface modified products or emulsified dispersions thereof (for example, K-50, K-30, K-10, A-705, S-702, L-710, FP series (Idemitsu Petrochemical Co., Ltd.), hydrolyzed silk liquid (Jomo), SILKGEN G Soluble S (ICHIMARU PHARCOS Co., Ltd.)), an antifouling agent (for example, a nonionic polymer compound composed of an alkylene terephthalate and/or an alkylene isophthalate units and a polyoxyalkylene unit (for example, FR627 manufactured by GOO CHEMICAL CO., LTD.), SRC-1 manufactured by Clariant (Japan), K. K.) may be mixed as another component. These may be used singly or in combination of two or more thereof.

### [Antistatic Agent]

Examples of the antistatic agent include, for example, cationic antistatic agents having cationic functional groups such as a quaternary ammonium salt, a pyridinium salt, and primary, secondary, and tertiary amino groups; anionic antistatic agents having anionic functional groups such as a sulfonate salt and a sulfate ester salt, a phosphonate and a phosphate ester salt; amphoteric antistatic agents such as an alkyl betaine and a derivative thereof, imidazoline and a derivative thereof, and alanine and a derivative thereof; and nonionic antistatic agents such an amino alcohol and a derivative thereof, glycerin and a derivative thereof, and a polyethylene glycol and a derivative thereof. For example, an ion conductive polymer obtained by polymerizing or copolymerizing a monomer having an ion conductive group of the cationic, anionic, or amphoteric antistatic agent, may be used. These may be used singly or in combination of two or more thereof.

### [Antiseptic Agent]

The antiseptic agent may be used mainly to enhance antisepsis power and bactericidal power to maintain antiseptic during long-term storage. Examples of the antiseptic agent include isothiazolone-based organosulfur compounds, benzisothiazolone-based organosulfur compounds, benzoic acids, and 2-bromo-2-nitro-1,3-propanediol.

### [Ultraviolet Absorber]

The ultraviolet absorber is an agent that has a protection effect against ultraviolet rays, and is a component that absorbs ultraviolet rays, converts them into infrared rays, visible rays, and the like, and emits them. Examples of the ultraviolet absorber include aminobenzoic acid derivatives, salicylic acid derivatives, silicic acid derivatives, benzophenone derivatives, azole-based compounds, and 4-t-butyl-4'-methoxybenzoylmethane.

### [Antibacterial Agent]

The antibacterial agent is a component that exhibits the effect of inhibiting bacteria from growing on fibers and further exhibits the effect of inhibiting generation of unpleasant odors derived from decomposition products of microorganisms. Examples of the antibacterial agents include, for example, cationic antibacterial agents such as a quaternary ammonium salt, bis-(2-pyridylthio-1-oxide) zinc, a polyhexamethylene biguanidine hydrochloride salt, 8-oxyquinoline, and a polylysine.

### [Deodorant]

Examples of the deodorant include cluster dextrin, methyl-β-cyclodextrin, 2-hydroxypropyl-β-cyclodextrin, monoacetyl-β-cyclodextrin, acylamidopropyl dimethylamine oxide, and an aminocarboxylic acid-based metal complex (the zinc complex of trisodium methylglycine diacetate described in WO2012/090580).

### [Amount of Other Component]

Each amount or the total amount of other components may be 0.1 part by weight or more, 1 part by weight or more, 3 parts by weight or more, 5 parts by weight or more, 10 parts by weight or more, 15 parts by weight or more, 20 parts by weight or more, 50 parts by weight or more, 75 parts by weight or more, or 100 parts by weight or more relative to 100 parts by weight of the water-repellent compound, and 500 parts by weight or less, 300 parts by weight or less, 200 parts by weight or less, 100 parts by weight or less, 50 parts by weight or less, 40 parts by weight or less, 30 parts by weight or less, 20 parts by weight or less, 10 parts by weight or less, or 5 parts by weight or less relative to 100 parts by weight of the water-repellent compound.

### <Fiber structure and method for producing same>

The fiber structure of the present disclosure refers to a textile product obtained by treating a fiber substrate with a water-repellent agent. The method for producing a fiber structure comprises a step of treating a substrate with the aforementioned water-repellent agent, thereby allowing a water-repellent compound which is an active ingredient of the water-repellent agent to adhere to the fiber substrate. The "treatment" refers to applying the water-repellent agent to a substrate by dipping, spraying, coating, etc. By the treatment, a water-repellent compound that is the active ingredient of the water-repellent agent, adheres to the inside and/or the surface of the substrate. Herein, the adhesion may be physical adhesion or chemical adhesion, and, for example, the water-repellent compound may be physically or chemically (by reaction) modified onto a hydroxy group of a substrate (for example, fiber).

The fiber structure may have a water-repellency as measured by the spray test method specified in JIS L1092:2009 of Grade 3 or more, Grade 4 or more, Grade 5 or more, preferably Grade 4 or more, and more preferably Grade 5 or more. The fiber structure has a soaking velocity as measured by the test method specified in DIN53924 of 25 mm/ 2h or less, 20 mm/ 2h or less, 15 mm/ 2h or less, 10 mm/ 2h or less, or 5 mm/ 2h or less, preferably 15 mm/ 2h or less, and more preferably 10 mm/ 2h or less.

### [Substrate]

Substrates to be treated with the water-repellent agent in the present disclosure are not limited, and are preferably a textile product or a paper product, and in particular, a textile product.

Examples of the substrate for textile products include animal and vegetable natural fibers such as cotton, linen, wool, and silk, synthetic fibers such as a polyamide, a polyester, a polyvinyl alcohol, a polyacrylonitrile, a polyvinyl chloride, and a polypropylene, and semi-synthetic fibers such as rayon and acetate, inorganic fibers such as a glass fiber, a carbon fiber, and an asbestos fiber, or blended fibers thereof. The textile products include a woven fabric, a knitted fabric, a nonwoven fabric, fabric in the form of clothing (for example, water-repellent garments, for example, a raincoat) and carpets, and a fiber, yarn and intermediate fiber product (for example, a sliver or a crude yarn) in a state of before being formed into fabric, may undergo treatment.

The fiber substrate may have an air permeability of more than 20 cc/cm²/sec, more than 25 cc/cm²/sec, more than 35 cc/cm²/sec, more than 45 cc/cm²/sec, more than 55 cc/cm²/sec, more than 65 cc/cm²/sec, or more than 75 cc/cm²/sec. The fiber substrate may have an air permeability of less than 200 cc/cm²/sec, less than 180 cc/cm²/sec, less than 160 cc/cm²/sec, less than 140 cc/cm²/sec, less than 120 cc/cm²/sec, less than 100 cc/cm²/sec, less than 80 cc/cm²/sec, less than 60 cc/cm²/sec, or less than 40 cc/cm²/sec. Air permeability usually does not change significantly even after the fiber substrate is treated with a water-repellent agent (after adhesion of a water-repellent compound), and the air permeability of the fiber substrate may be read as the air permeability of the fiber structure. The fiber structure of the present disclosure can develop suitable water repellency and/or soaking resistance even when the fiber substrate has high air permeability.

The fiber substrate may have a fabric density of more than 100 g/m², more than 125 g/m², more than 150 g/m², more than 175 g/m², more than 200 g/m², more than 225 g/m², or more than 250 g/m². The fiber substrate may have a fabric density of less than 500 g/m², less than 450 g/m², less than 400 g/m², less than 350 g/m², less than 300 g/m², less than 250 g/m², less than 200 g/m², less than 150 g/m², or less than 125 g/m². Fabric density usually does not change significantly even after the fiber substrate is treated with a water-repellent agent (after adhesion of a water-repellent compound), and the fabric density of the fiber substrate may be read as the fabric density of the fiber structure. The fiber structure of the present disclosure can develop suitable water repellency and/or soaking resistance even when the fiber substrate has high fabric density.

The fiber structure of the present disclosure is suitable as a fabric used for purposes that require high air permeability and high fabric density (for example, fabric for shoes).

Examples of the substrate for paper products include, for example, bleached or unbleached chemical pulp such as kraft pulp or sulfite pulp, bleached or unbleached high-yield pulp such as groundwood pulp, mechanical pulp, or thermomechanical pulp, paper made from wastepaper pulp such as wastepaper of newspapers, magazines, and cardboard, and deinked wastepaper, a container made of paper, and a molded product made of paper. Specific examples of the paper products include, for example, a food packaging material, a food container, gypsum liner board base paper, coated base paper, medium-quality paper, a general liner and core, neutral pure white roll paper, a neutral liner, a rust-proof liner, and metal pasted paper, kraft paper, neutral printing writing paper, neutral coated base paper, neutral PPC paper, neutral thermal paper, neutral pressure-sensitive base paper, neutral inkjet paper and neutral information paper, and molded paper (mold container), and suitable examples thereof include the food packaging material and the food container.

A substrate to be treated with the water-repellent agent of the present disclosure is not limited to textile products or paper products, and it may also include, for example, stone, a filter (for example, an electrostatic filter), a dust-protective mask, fuel cell parts (for example, a gas diffusion electrode and a gas diffusion support), glass, wood, leather, fur, asbestos, brick, cement, metal and oxide, a ceramic product, a plastic, a painted surface, and a plaster.

When the substrate is glass, a glass product to be produced may be an optical member. A certain layer (or film), such as a hard coat layer or an antireflection layer, may be formed on the surface (outermost layer) of a glass substrate. The antireflection layer may be any of a single-layer antireflection layer and a multi-layer antireflection layer. Examples of inorganic substances usable in the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. One of these inorganic substances may be used singly, or two or more may be used in combination (e.g., as a mixture). In the case of a multi-layer antireflection layer, SiO₂ and/or SiO is preferably used in the outermost layer thereof. When the article to be produced is an optical glass component for a touch panel, a part of the surface of the substrate (glass) may have a transparent electrode such as a thin film in which indium tin oxide (ITO), indium zinc oxide, or the like is used. The substrate, according to its specific configuration or the like, may have an insulating layer, an adhesive layer, a protecting layer, a decorated frame layer (I-CON), an atomizing film layer, a hard coating layer, a polarizing film, a phase difference film, a liquid crystal display module, or the like.

### [Treatment Method]

The water--repellent agent of the present disclosure can be applied to a substrate as a treatment agent (particularly a surface-treating agent) by a conventionally known method. The treatment method may be a method for dispersing the water-repellent agent in the present disclosure in an organic solvent or water, if necessary, to dilute it and allowing it to adhere to an inside of a substrate and/or on a surface thereof by a known method such as dip coating, spray coating, and foam coating, and drying the liquid. After drying, a product to which a solid component of the water-repellent agent has been adhered, is obtained. If necessary, the water-repellent agent of the present disclosure may be applied in combination of a suitable cross-linking agent, and curing may be carried out. If necessary, the water-repellent agent of the present disclosure can be further combined for use with various additives such as water- and/or oil-repellent agents, an anti-slip agent, an antistatic agent, a texture modifier, a softening agent, an antibacterial agent, a flame retarder, a coating material fixing agent, a wrinkle-resistant agent, a drying rate adjuster, a cross-linking agent, a film formation agent, a compatibilizer, an antifreezing agent, a viscosity modifier, an ultraviolet absorber, an antioxidant, a pH adjuster, an insect repellent, and an antifoaming agent. Examples of the various additives may be the same as those explained in the section "Other Component" described above. A concentration of the water-repellent agent in a treatment agent brought into contact with a substrate may be appropriately changed depending on its use, and may be 0.01 to 10% by weight, for example 0.05 to 5% by weight.

The water-repellent agent can be applied to a substrate by any of methods known for treating a substrate with liquid. The substrate may be immersed in the solution of the water-repellent agent, or the solution of the water-repellent agent may be adhered or sprayed onto the substrate. The treated substrate is preferably dried and cured by heating in order to develop liquid-repellency. The heating temperature may be, for example, 100°C to 200°C, 100°C to 170°C, or 100°C to 120°C. Favorable performance can be obtained even by heating at lowered temperatures (for example, 100°C to 140°C) in the present disclosure. In the present disclosure, the heating time may be 5 seconds to 60 minutes, for example, 30 seconds to 3 minutes. When the substrate is paper, the paper may undergo coating, or solution may be adhered or sprayed onto the paper, or the solution may be mixed with pulp slurry before papermaking to undergo treatment. The treatment may be external addition treatment or internal addition treatment. Alternatively, the water-repellent agent may be applied to a textile product by a cleaning method, and for example, it may be applied to a textile product in, for example, washing application or a dry cleaning method.

### [Pretreatment of Fiber Product]

The fiber product may be pretreated before being treated with the water-repellent agent of the present disclosure. Pretreatment of the fiber product enables imparting excellent fastness to a fiber product after treated with the water-repellent agent.

Examples of the pretreatment of fiber product include, for example, cationization treatment such as reaction with a reactive quaternary ammonium salt, anionization treatment such as sulfonation, carboxylation, and phosphorylation, acetylation treatment after the anionization treatment, benzoylation treatment, carboxymethylation treatment, graft treatment, tannic acid treatment, and polymer coating treatment.

A method for pretreating the fiber product is not limited, but the fiber product can be pretreated by a conventionally known method. A method for dispersing a pretreatment liquid in an organic solvent or water, if necessary, to dilute the pretreatment liquid and adhering it to an inside of the fiber product and/or on a surface thereof by a known method such as dip coating, spray coating, or foam coating, and drying the liquid may be employed. The pH, temperature, etc. of the pretreatment liquid may be adjusted according to an extent of treatment desired. As an example of the method for pretreating a fiber product, a method for pretreating a fiber product with the treatment agent described above will be described in detail.

The pretreatment method of a fiber product may involve a step of imparting a fiber with one or more functional groups (hereinafter sometimes referred to as "specific functional groups") selected from the group consisting of the monovalent group represented by -SO₃M¹ (wherein M¹ represents a monovalent cation) or the monovalent group represented by -COOM² (wherein M² represents a monovalent cation), and the monovalent group represented by -O-P(O) (OX¹)(OX²) (wherein X¹ and X² each independently represent a hydrogen atom or an alkyl group having 1 to 22 carbon atoms).

Examples of M¹ include H, K, Na, or an ammonium ion which may have a substituent. Examples of M² include H, K, Na, or an ammonium ion which may have a substituent. When X¹ or X² is an alkyl group, it is preferably an alkyl group having 1 to 22 carbon atoms and more preferably an alkyl group having 4 to 12 carbon atoms.

A fiber containing the above specific functional group (hereinafter sometimes referred to as a "functional group-containing fiber") can be prepared, for example, by the following method.
(i) A compound having the above specific functional group is allowed to adhere to a fiber material. The adhesion of the compound may be in a condition such that a portion of the compound and a portion of the fibers are chemically bonded as long as the above specific functional groups remain in a sufficient amount.
(ii) A fiber is prepared by directly introducing the above specific functional group into the material constituting the fiber.

In the case of (i), for example, a functional group-containing fiber can be obtained by treating the fiber material with a pretreatment liquid containing one or more compounds having the above specific functional group, namely, by the step of introducing the functional group.

Materials used for the fiber material, are not limited, and examples thereof include natural fibers such as cotton, linen, silk, and wool, semi-synthetic fibers such as rayon and acetate, synthetic fibers such as a polyamide (nylon, etc.), a polyester, a polyurethane, and a polypropylene, composite fibers thereof, blended fibers, and the like. A form of the fiber material may be any form such as a fiber (tow, sliver, etc.), a yarn, a knitted fabric (including an interknitted fabric), a woven fabric (including an interwoven fabric), or a nonwoven fabric.

In the present embodiment, from the viewpoint of improving water-repellency of the obtained textile product, a fiber material containing a polyamide and a polyester as raw materials, is preferably used, and in particular, nylon such as nylon 6, or nylon 6,6, a polyester such as a polyethylene terephthalate (PET), a polytrimethyl terephthalate, or polylactic acid, and blended fibers containing these, are preferably used.

A Phenolic polymer can be used as the compound having -SO₃M¹ described above. Examples of such a phenolic polymer include that containing at least one of compounds represented by the following general formula: 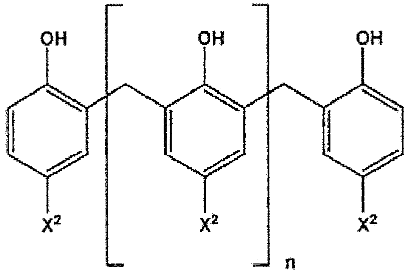 [wherein X² represents -SO₃M³, wherein M³ represents a monovalent cation, or a group represented by the following general formula, and n is an integer of 20 to 3,000.] 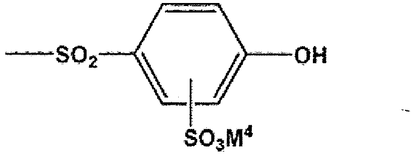 [wherein M⁴ represents a monovalent cation.].

Examples of M³ includes H, K, Na or an ammonium ion that may have a substituent.

Examples of M⁴ includes H, K, Na or an ammonium ion which may have a substituent.

The compounds represented by the general formula above may be, for example, formalin condensates of phenol sulfonic acid and formalin condensates of sulfonated bisphenol S.

Examples of the compound having -COOM² above include a polycarboxylic acid-based polymer.

As the polycarboxylic acid-based polymer, for example, a polymer synthesized by a conventionally known radical polymerization method using acrylic acid, methacrylic acid, maleic acid, or the like as a monomer, or a commercially available polymer, can be used.

A method for producing the polycarboxylic acid-based polymers may include, for example, adding a radical polymerization initiator to an aqueous solution of the aforementioned monomer and/or salt thereof and heating and reacting the mixture at 30 to 150°C for 2 to 5 hours. At this time, an aqueous solution of the above monomer and/or salt thereof may be added with aqueous solvents such as alcohols such as methanol, ethanol, and isopropyl alcohol, and acetone. Examples of the radical polymerization initiator include persulfates such as potassium persulfate, sodium persulfate, and ammonium persulfate, redox polymerization initiators in combination of the persulfate and sodium bisulfite or the like, hydrogen peroxide, and a water-soluble azo-based polymerization initiator. These radical polymerization initiators may be used singly or in combination of two or more thereof. Furthermore, a chain transfer agent (for example, octyl thioglycolate) may be added upon radical polymerization for the purpose of adjusting the degree of polymerization.

In addition to the aforementioned monomers, a copolymerizable monomer can be used for radical polymerization. Examples of the copolymerizable monomer include vinyl-based monomers such as ethylene, vinyl chloride, and vinyl acetate, an acrylamide, acrylates, and methacrylates. The acrylates and methacrylates preferably have a hydrocarbon group having 1 to 3 carbon atoms, which may have a substituent such as a hydroxyl group. Examples of such acrylates or methacrylates include methyl acrylate, methyl methacrylate, ethyl acrylate, ethyl methacrylate, 2-hydroxyethyl acrylate, 2-hydroxyethyl methacrylate, propyl acrylate, propyl methacrylate, and the like. These copolymerizable monomers may be used singly or in combination of two or more thereof.

A carboxyl group in the polycarboxylic acid-based polymer may be free or may be neutralized with an alkali metal, an amine-based compound, or the like. Examples of the alkali metal include sodium, potassium, lithium, and the like, and examples of the amine-based compound include ammonia, monoethanolamine, diethanolamine, triethanolamine, and the like.

The weight-average molecular weight of the polycarboxylic acid-based polymer is preferably 1,000 to 20,000 and more preferably from 3,000 to 15,000, from the viewpoint of favorable water-repellency of the resulting textile product.

As the polycarboxylic acid-based polymer, commercially available products such as "Neocrystal 770" (trade name, manufactured by NICCA CHEMICAL CO., LTD.) and "Ceropol PC-300" (trade name, manufactured by Sanyo Chemical Industries, Ltd.) can be used.

Examples of the compound having -O-P(O) (OX¹)(OX²) as described above include phosphoric acid ester compounds represented by the following general formula: 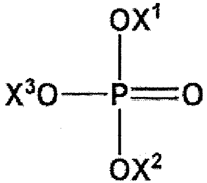 [wherein, X¹ or X² is the same as defined above, and X³ represents an alkyl group having 1 to 22 carbon atoms.]

As the aforementioned phosphoric acid ester compound, phosphoric acid monoesters, diesters and triesters, and mixtures thereof can be used in which the alkyl ester moiety is an alkyl group having 1 to 22 carbon atoms.

In view of favorable water-repellency of the textile products to be obtained, lauryl phosphoric acid ester and decyl phosphoric acid ester are preferably used.

As the phosphoric acid ester compound, for example, a commercially available product such as "Phosphanol ML-200" (trade name, manufactured by TOHO Chemical Industry Co., Ltd.) can be used.

A pretreatment liquid containing one or more of the compounds having the aforementioned specific functional group can be, for example, an aqueous solution of the compound described above. The pretreatment liquid may also contain an acid, alkali, surfactant, chelating agent, and the others.

Examples of the method for treating a fiber material with the above pretreatment liquid include padding treatment, dip treatment, spray treatment, and coating treatment. Examples of padding treatment include the method involving using the padding apparatus as described on pages 396 to 397 of Seni Sensyoku Kako Jiten (in Japanese; Fiber-dyeing process dictionary) (published by THE NIKKAN KOGYO SHIMBUN, LTD., 1963) and pages 256 to 260 of Irozome Kagaku (in Japanese; dyeing chemistry) III (published by Jikkyo Shuppan Co., Ltd., 1975). Examples of the coating treatment include the method involving using a coating machine as described on pages 473 to 477 of Sensyoku Shiage Kiki Soran (in Japanese; Comprehensive guide to dyeing and finishing machines) (published by Fiber Japan CO., LTD., 1981). Examples of the dip treatment include the method involving using a batch type dyeing machine as described in pages 196 to 247 of Sensyoku Shiage Kiki Soran (in Japanese) (published by Fiber Japan CO., LTD., 1981), and for example, a jet dyeing machine, air flow dyeing machine, drum dyeing machine, wince dyeing machine, washer dyeing machine, and cheese dyeing machine can be used. Examples of the spray treatment includes a method involving using an air spray that nebulizes and sprays a treatment liquid by compressed air, or an air spray by hydraulic pressure nebulization system. In this case, the concentration of the treatment liquid and treatment conditions of heat treatment after application can be adjusted appropriately, taking into consideration various conditions such as their purposes and performance. Moreover, in a case in which the pretreatment liquid contains water, it is preferably dried to remove water after the pretreatment liquid has been allowed to adhere to the fiber material. The drying method are not limited, and either a dry heat method or a wet heat method may be employed. Drying temperatures are also not limited, and for example, drying may be carried out at room temperature to 200°C for 10 seconds to several days. Heat treatment at a temperature of 100 to 180°C for about 10 seconds to 5 minutes may be carried out after the drying, as necessary.

In a case in which a fiber material is such that it is to be dyed, treatment with the pretreatment liquid may be carried out before dyeing or in the same bath as in dyeing, but in the case of carrying out reduction soaping, a compound with the above specified functional group (for example, a phenolic polymer compound or the like) adsorbed in the process may fall off, and therefore the treatment with the pretreatment liquid is preferably carried out after the reduction soaping after dyeing.

The treatment temperature in the dip treatment can be 60 to 130°C. The treatment time can be 5 to 60 minutes.

The step of introducing a functional group by the pretreatment liquid is preferably carried out so that the amount of compound having the above specified functional group adhered is 1.0 to 7.0 parts by weight relative to 100 parts by weight of a fiber material. Within this range, both durable water-repellency and texture can be achieved at a high level.

The pH of the pretreatment liquid may be adjusted to less than 7, for example, 3 to 5. The pH adjustment can be carried out by using a pH adjuster such as acetic acid or malic acid.

A salt can be used in combination with the pretreatment liquid to adsorb the compound having the aforementioned specific functional group effectively onto the fiber material by a salting effect. Examples of the salt that can be used include, for example, sodium chloride, sodium carbonate, ammonium sulfate, and sodium sulfate.

In the step of introducing the functional group by the pretreatment liquid, an excess amount of the compound having the aforementioned specific functional group, which has been given by the treatment, is preferably removed. Examples of the removal method include washing with water. Sufficient removal can avoid inhibition of development of water-repellency in the subsequent water-repellent treatment, and additionally, the textile product to be obtained has the favorable texture. The resulting functional group-containing fiber is preferably fully dried prior to contact with the treatment agent described above.

Examples of (ii) the fiber in which the aforementioned specific functional group has been introduced directly into the material forming the fiber include a cation-dyeable polyester (CD-PET).

In view of favorable water-repellency of the textile products to be obtained, the functional group-containing fiber preferably has a zeta potential of its surface of - 100 to -0.1 mV and more preferably -50 to -1 mV. The zeta potential of the fiber surface can be measured, for example, using a zeta potential and particle size measurement system, ELSZ-1000ZS (manufactured by Otsuka Electronics Co., Ltd.).

Embodiments have been described above, but it will be understood that various modifications can be made to embodiments and details without departing from the spirit and the scope of the claims.

### Examples

The present disclosure will be described in more detail below by way of Examples, but the present disclosure is not limited to these Examples.

### <Production Examples 1 to 6: Synthesis of water-repellent compound which is acrylic polymer>

### [Production Example 1]

30 g of a water-soluble glycol solvent and 120 g of pure water as a liquid medium, 40 g of stearyl acrylate, 2 g of sorbitan fatty acid ester as a surfactant, and 2 g of cationic emulsifier and 6 g of polyoxyethylene alkyl ether as an emulsifier were put in a 500 ml container, and the mixture was heated to 80°C and stirred by homomixer for 1 minute at 2,000 rpm, and then emulsified and dispersed by ultrasound for 15 minutes.

The mixture was transferred to a 500 ml autoclave and nitrogen replacement was performed, and then 0.2 g of lauryl mercaptan as a chain transfer agent and 20 g of vinyl chloride were put thereto. 1 g of an azo group-containing water-soluble initiator was added as a polymerization initiator, and the mixture was heated to 60°C and reacted for 4 hours to give a dispersion of the polymer. The dispersion was also diluted with pure water to prepare a water dispersion having a solid concentration of 30%.

### [Production Examples 2 to 4, 6]

A water dispersion was prepared in the same manner as in Example 1, except for changing the formulation according to Table 1.

### [Production Example 5]

### (Preparation of silicone polymer)

A 200 mL four-neck flask equipped with a stirring rod, a thermometer and a reflux tube was charged with 12 g of methyl hydrogen silicone oil (SiH:SiCH₃ molar ratio = 50:50 as measured by 1H NMR) and 0.02 g of a platinum catalyst. Then 36 g of 1-hexacosene was put in a dropping funnel and added dropwise through the dropping funnel while maintaining at 70°C. After the completion of the dropwise addition, the reaction was continued at 70°C for 3 hours. The peak of SiH was found to disappear by infrared spectroscopy (IR), and 47 g of a solid silicone polymer was obtained.

Next, 28 g of the silicone polymer, 5.6 g of a water-soluble glycol solvent, 60 g of pure water, 1.7 g of sorbitan fatty acid ester, 0.7 g of polyoxyethylene alkyl ether and 0.6 g of cationic emulsifier were put in a 250 ml glass container, and the mixture was heated to 75°C and stirred by a homomixer for 1 minute at 2,000 rpm, and then emulsified and dispersed by ultrasound for 10 minutes to give a dispersion of the silicone polymer. Subsequently, pure water was added thereto to prepare a water dispersion of the silicone polymer having a solid concentration of 30% by mass.

### (Preparation of acrylic polymer in the presence of silicone polymer)

25.5 g of a water-soluble glycol solvent, 17 g of stearyl acrylate, 17 g of stearyl group-containing amide acrylate, 153 g of pure water, 1.7 g of sorbitan fatty acid ester, 1.7 g of a cationic emulsifier, 5.1 g of polyoxyethylene alkyl ether and 11 g of the silicone polymer synthesized above were heated to 80°C in a 500 ml container, stirred by a homomixer for 1 minute at 2,000 rpm and then emulsified and dispersed by ultrasound for 15 minutes. The emulsified dispersion was transferred to a 500 ml autoclave and nitrogen replacement was performed, and then 0.17 g of lauryl mercaptan and 17 g of vinyl chloride were put thereto. 0.85 g of an azo group-containing water-soluble initiator was also added thereto, and the mixture was heated to 60°C and reacted for 4 hours to give an aqueous dispersion of the polymer. The dispersion was also diluted with pure water to prepare a water dispersion having a solid concentration of 30%.

Stearyl group-containing amide acrylate refers to stearic acid amide ethyl acrylate and polyoxyethylene alkyl phenol refers to LATEMUL PD-420 manufactured by Kao Corporation.

### <Production Examples 7 to 10: Synthesis of water-repellent compound which is isocyanate derivative>

### [Production Example 7]

### (Synthesis of isocyanate derivative)

500 parts by mass of 1,6-hexamethylene diisocyanate (HDI manufactured by Mitsui Chemicals, Inc. product name: Takenate 700), 0.25 parts by mass of 2,6-di(tert-butyl)-4-methylphenol (also called dibutylhydroxytoluene, BHT, hindered phenol antioxidant) and 0.25 parts by mass of tetraphenyl · dipropylene glycol · diphosphite (organic phosphate ester, auxiliary catalyst) were mixed in a reactor equipped with a thermometer, a stirrer, a nitrogen gas inlet, and a cooling tube. 10.7 parts by mass of 1,3-butanediol was added to the mixture and nitrogen was introduced into the liquid phase for 1 hour. Subsequently, the temperature of the mixture was increased to 80°C and the mixture was reacted for 3 hours and then the temperature was lowered to 60°C. Then 0.2 parts by mass of trimethyl-N-2-hydroxypropylammonium · 2-ethylhexanoate was added thereto as an isocyanurate catalyst and the reaction was performed for 1.5 hours. Subsequently, 0.04 parts by mass of o-toluene sulfonamide was added thereto relative to 100 parts by mass of HDI. The reaction mixture was distilled by passing through a thin film distillation apparatus (temperature 150°C, degree of vacuum: 93.3 Pa) until the amount of the remaining HDI monomer was 0.5% or less to give an aliphatic polyisocyanate derivative (an isocyanurate derivative of hexamethylene diisocyanate). The content of the isocyanate group in the resulting isocyanurate derivative was 20.9% and the average number of the isocyanate functional groups was 3.0.

### (Production of hydrocarbon polyurethane)

100.20 g of the isocyanurate derivative obtained above, 67.60 g of KALCOL 8098 (stearyl alcohol, manufactured by Kao Corporation) as a long chain active hydrogen compound and 22.30 g of oleyl alcohol were mixed in a reactor equipped with a stirrer, a thermometer, a condenser, and a nitrogen gas inlet, and the mixture was reacted in a nitrogen atmosphere at 110°C for 4 hours until the concentration of the isocyanate group was 3.67%.

Next, the reaction solution was cooled to 80°C and 9.90 g of N-methyl diethanolamine was added thereto as a cationic active hydrogen compound, and the mixture was reacted at 80°C for 1 hour.

Then, 50.00 g of methyl ethyl ketone was added thereto as a solvent and the reaction was performed at 80°C until the isocyanate groups were found to disappear based on the infrared absorption spectrum.

Subsequently, 57.69 g of methyl ethyl ketone was added to the reaction solution and the temperature of the mixture was increased to 80°C, and the reaction solution was mixed until completely dissolved, and then the mixture was cooled to 75°C.

After that 18.96 g of acetic acid was added thereto as an acid compound to neutralize the solution.

Then, 800.0 g of ion exchange water heated to 70°C was gradually added to the reaction solution while maintaining the reaction solution at 75°C to emulsify the solution (internal emulsification).

The solvent was then removed by an evaporator at a water bath temperature of 60°C under reduced pressure so that the solid concentration was 20% by weight or more.

The solid concentration was then adjusted using ion exchange water so that the solid concentration excluding the acid compound (acetic acid) was 20% by weight to give a water dispersion containing polyurethane.

### [Production Example 8]

A 500 mL four-neck flask equipped with a stirring rod, a thermometer and a reflux tube was charged with 116 g of sorbitan tristearate and 150 g of 4-methyl-2-pentanone (MIBK). Next, to remove excess water vapor from the mixture, the mixture was stirred and refluxed for 1 hour while maintaining the temperature of the mixture at 70°C, and then allowed to cool to 50°C. Subsequently, while maintaining stirring, 30 g of Desmodur N-100 (a biuret derivative of hexamethylene diisocyanate, Covestro AG) was added dropwise to the mixture using a dropping funnel. After the completion of the dropwise addition, a drop of dibutyltin dilaurate was added thereto as a catalyst, and the reaction was performed at 80°C for 1 hour. Next, 25 g of sorbitan monostearate was added thereto and the reaction was performed at 80°C for 4 hours.

The reaction solution was cooled to 60°C and then collected, and the reaction solution and an optional amount of water at 60°C including a cationic emulsifier and polyoxyethylene alkyl ether were gradually mixed. The mixture was stirred by using a homomixer for 1 minute at 6,000 rpm, and then emulsified and dispersed by ultrasound for 15 minutes. After that the solvent (MIBK) was removed by decompression operation, and then pure water was added to adjust the concentration to give a water dispersion containing polyurethane having a solid concentration of 20%.

### [Production Example 9]

A 500 mL four-neck flask equipped with a stirring rod, a thermometer and a reflux tube was charged with 150 g of methyl ethyl ketone (MEK) and 51 g of stearyl alcohol. Next, to remove excess water vapor from the mixture, the mixture was stirred and refluxed for 1 hour while maintaining the temperature of the mixture at 70°C, and then allowed to cool to 50°C. Subsequently, 30 g of Desmodur N-3200A (a biuret derivative of hexamethylene diisocyanate, Covestro) was added to the mixture, and the mixture was allowed to react at 80°C for 4 hours.

The reaction solution was cooled to 60°C and then collected, and the reaction solution and an optional amount of water at 60°C including polyoxyethylene alkyl ether were gradually mixed. The mixture was stirred by using a homomixer for 1 minute at 6,000 rpm, and then emulsified and dispersed by ultrasound for 15 minutes.

After that the solvent (MEK) was removed by decompression operation, and then pure water was added to adjust the concentration to give a water dispersion containing polyurethane having a solid concentration of 20%.

### [Production Example 10]

A 1000-mL flask was charged with 190.6 g of trimethylolpropane, 808.2 g of stearic acid and 1.2 g of p-toluenesulfonic acid, and dehydration reaction was performed in a nitrogen stream at 140 to 210°C for 3 hours to give a product. The acid value and the hydroxyl group value of the product were measured, and as a result the product had an acid value of 1.8 mgKOH/ g and a hydroxyl value of 89 mgKOH/ g. 715.5 g of the above product, 180.2 g of hexamethylene diisocyanate and 1.3 g of a bismuth catalyst (NEOSTANN U-600 manufactured by Nitto Kasei Co., Ltd.) were put in another container and the reaction was performed at 80°C for 5 hours. The reaction was continued until the NCO% reached 5.0. After the reaction the temperature was lowered to 40°C and then 103.0 g of 3,5-dimethylpirazol was put thereto and the reaction was performed at 40°C for 1 hour to give an isocyanate derivative. In the isocyanate derivative, two hydroxy groups in trimethylolpropane form an ester group with stearic acid, and one hydroxy group forms a urethane bond with hexamethylene diisocyanate blocked with 3,5-dimethylpyrazole at one end.

40 g of the isocyanate derivative obtained above, 50 g of methyl ethyl ketone, 10 g of polyglycerol fatty acid ester and 5 g cationic emulsifier were put in a 500 mL stainless steel container, and the mixture was heated to 50°C to dissolve the components. 295 g of hot water at 80°C was added thereto and the mixture was emulsified by using an ultrasonic emulsifier for 20 minutes while maintaining the temperature at 80°C. The mixture was then cooled to give a 10% dispersion of the isocyanate derivative.

### <Examples and Comparative Examples>

The dispersions prepared in the above Production Examples were diluted with tap water so that the composition was as shown in Table 2 to prepare 1,000 g of a test solution having a solid concentration of 1.0%.

Each of the test fabrics shown in Table 2 was dipped in the respective test solutions, and then passed through a mangle, dried and cured by passing through a pin tenter at 160°C for 1 minute. Then the following "water repellent test" and "soaking resistance test" were performed.

ECO PLUS (manufactured by Rudolf GmbH) was used as the dendrimer water-repellent.

A 40% by mass water dispersion of dimethylpyrazole-blocked HDI (hexamethylene diisocyanate) trimer was used as the curing agent.

The procedure of the tests is as follows. The results are shown in Table 2.

### [Water Repellency Test]

The water-repellency was evaluated and graded based on the spray test method specified in JIS-L-1092 (AATCC-22) "Testing methods for water resistance of textiles" based on the following criteria.
Water repellency: condition
5: No droplets adhering on the surface, surface not wet
4: A few droplets adhering on the surface, surface slightly wet
3: Part of surface wet
2: Surface wet
1: Entire surface wet
0: Both surfaces fully wet

### [Soaking Resistance Test]

The soaking resistance was evaluated by the test method specified in DIN53924. More specifically, the soaking resistance was evaluated by the following method. Each of the fiber structures was cut to a size of 3 cm wide and 8 cm long, and a water line was marked 1 cm from the bottom. The fiber structure was then suspended and the bottom part of the structure was immersed in water up to the water line, and the structure was allowed to stand for 2 hours. After 2 hours, the length (mm) of the wetted area (from the water line) was measured by capillary action.

### [Water Contact Angle Test]

The water contact angle of the water-repellent compound was obtained by spin-coating a chloroform solution of the water-repellent compound having a solid concentration of 1.0% on a silicon wafer substrate, dropping 2 µL of water on the coating film, and measuring the contact angle one second after the droplet reached the film.

### [Air Permeability Test]

The air permeability was measured by JIS L1096:2010 8.26.1 A method (Frazier method).

### [Measurement of Fabric Density]

The fabrics were cut into 10 pieces of a size of 10 cm × 10 cm, weighed, and the average weight was determined. The fabric density g/m² was calculated from the above average weight.

**[Table 1]**

| | Production Example 1 | Production Example 2 | Production Example 3 | Production Example 4 | Production Example 5 | Production Example 6 |
|---|---|---|---|---|---|---|
| Stearyl acrylate | 40 | 38.8 | 60 | 20 | Shown in the description | 40 |
| Stearyl group-containing amide acrylate | | | | 20 | | |
| Diacetone acrylamide | | 1.2 | | | | |
| Vinyl chloride | 20 | 20 | | 20 | | 20 |
| Azo group-containing water-soluble initiator | 1 | | 1 | 1 | | 1 |
| Lauryl mercaptan | 0.2 | 0.2 | 0.2 | 0.2 | | 0.2 |
| Pure water | 120 | 120 | 120 | 120 | | 120 |
| Water-soluble glycol solvent | 30 | 30 | 30 | 30 | | 30 |
| Cationic emulsifier | 2 | 2 | 2 | 2 | | 2 |
| Reactive emulsifier | | | | | | 6 |
| Sorbitan fatty acid ester | 2 | 2 | 2 | 2 | | 2 |
| Polyoxyethylene alkyl ether | 6 | 6 | 6 | 6 | | |
| Acetic acid | 0.1 | 0.1 | 0.1 | 0.1 | | 0.1 |

| | | | | | | |
|---|---|---|---|---|---|---|
| The numbers in the table indicate the amount of feed (g). | | | | | | |

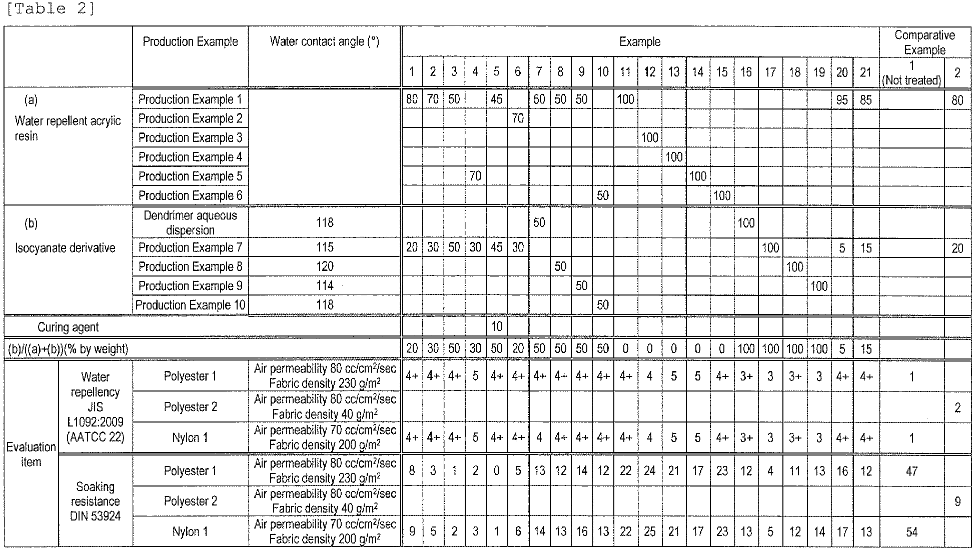

The air permeability of polyester 1 increased to 88 cc/cm²/sec from 80 cc/cm²/sec after treating with the repellent, and the fabric density of polyester 1 increased to 232 g/m² from 230 g/m² after treating with the repellent.

The air permeability of nylon 1 increased to 77 cc/cm²/sec from 70 cc/cm²/sec after treating with the repellent, and the fabric density of nylon 1 increased to 201 g/m² from 200 g/m² after treating with the repellent.

The air permeability of polyester 2 increased to 86 cc/cm²/sec from 80 cc/cm²/sec after treating with the repellent, and the fabric density of polyester 2 did not change from 40 g/m².

There were no significant differences between Examples or between Comparative Examples.

## Claims

1. A fiber structure comprising a fiber substrate to which a water-repellent compound having a hydrocarbon group having 6 or more and 40 or less carbon atoms is adhered, wherein
the fiber structure has an air permeability of more than 20 cc/cm²/sec and a fabric density of more than 100 g/m².

2. The fiber structure according to claim 1, wherein the water-repellent compound is at least one selected from the group consisting of an acrylic polymer and an isocyanate derivative.

3. The fiber structure according to claim 2, wherein
the water-repellent compound comprises the acrylic polymer, and
the acrylic polymer comprises a repeating unit derived from a multi-carbonyl monomer having one ethylenically unsaturated double bond and two or more carbonyl groups.

4. The fiber structure according to claim 2 or 3, wherein
the water-repellent compound comprises the isocyanate derivative, and
the isocyanate derivative comprises a moiety derived from a cationic active hydrogen compound.

5. The fiber structure according to any one of claims 2 to 4, wherein the water-repellent compound comprises the acrylic polymer and the isocyanate derivative.

6. The fiber structure according to any one of claims 2 to 5, wherein the water-repellent compound comprises the acrylic polymer and the isocyanate derivative that has a water contact angle of 100° or more and that comprises a moiety derived from a cationic active hydrogen compound.

7. The fiber structure according to any one of claims 2 to 6, wherein a weight ratio between the acrylic polymer and the isocyanate derivative is 50/50 to 80/20.

8. The fiber structure according to any one of claims 1 to 7, wherein the fiber structure has a water repellency of grade 4 or higher as measured by the spray test method specified in JIS L1092:2009, and a soaking velocity of less than 10 mm/2h as measured by the test method specified in DIN 53924.

9. The fiber structure according to any one of claims 1 to 8, wherein
the water-repellent compound comprises an acrylic polymer and an isocyanate derivative,
the acrylic polymer comprises a monomer (a) having a hydrocarbon group having 6 or more and 40 or less carbon atoms,
the monomer (a) is a monomer represented by the formula:
CH₂=C(-X^{a})-C(=O)-Y^{a}(R^{a})ₖ
wherein R^{a} is each independently a hydrocarbon group having 6 to 40 carbon atoms,
X² is a hydrogen atom, a monovalent organic group or a halogen atom,
Y^{a} is a divalent to tetravalent group, and
k is 1 to 3,
the amount of a repeating unit derived from the monomer (a) is 50% by weight or more relative to the acrylic polymer,
the isocyanate derivative has a water contact angle of 100° or more and comprises a moiety derived from a cationic active hydrogen compound, and
the weight ratio between the acrylic polymer and the isocyanate derivative is 50/50 to 80/20.

10. A water-repellent agent comprising a water-repellent compound having a hydrocarbon group having 6 or more and 40 or less carbon atoms, wherein
the water-repellent compound comprises an acrylic polymer and an isocyanate derivative,
the isocyanate derivative has a water contact angle of 100° or more and comprises a moiety derived from a cationic active hydrogen compound, and
a weight ratio between the acrylic polymer and the isocyanate derivative is 50/50 to 80/20.

11. The water-repellent agent according to claim 10, wherein the acrylic polymer comprises a repeating unit derived from a multi-carbonyl monomer having one ethylenically unsaturated double bond and two or more carbonyl groups.

12. A method for producing a fiber structure, comprising treating a fiber substrate having an air permeability of more than 20 cc/cm²/sec and a fabric density of more than 100 g/m² with a water-repellent agent comprising a water-repellent compound having a hydrocarbon group having 6 or more and 40 or less carbon atoms.

13. A method for producing a fiber structure, comprising treating a fiber substrate having an air permeability of more than 20 cc/cm²/sec with a water-repellent agent, wherein
the water-repellent agent comprises a water-repellent compound having a hydrocarbon group having 6 or more and 40 or less carbon atoms,
the water-repellent compound comprises an acrylic polymer and an isocyanate derivative, and
the isocyanate derivative has a water contact angle of 100° or more and comprises a moiety derived from a cationic active hydrogen compound.

14. The method for producing a fiber structure according to claim 13, wherein a weight ratio between the acrylic polymer and the isocyanate derivative is 50/50 to 80/20.

15. The method for producing a fiber structure according to claim 13 or 14, wherein
the water-repellent compound comprises the acrylic polymer, and
the acrylic polymer comprises a repeating unit derived from a multi-carbonyl monomer having one ethylenically unsaturated double bond and two or more carbonyl groups.
